# EUROPEAN PATENT APPLICATION

(11) **EP 3 661 271 A1**
(43) Date of publication of application: **03.06.2020**
(21) Application number: 17920712.1
(22) Date of filing: 11.08.2017
(51) Int. Cl.: H04W 52/02

(54) **METHOD FOR ACTIVATING SECONDARY CELL, COMMUNICATION APPARATUS, AND NETWORK DEVICE**

(71) Applicant: Huawei Technologies Co., Ltd., Longgang District Shenzhen, Guangdong 518129 (CN)
(72) Inventor: MIAO, Jinhua, Shenzhen, Guangdong 518129 (CN); QUAN, Wei, Shenzhen, Guangdong 518129 (CN); ZHANG, Jian, Shenzhen, Guangdong 518129 (CN); CHAI, Li, Shenzhen, Guangdong 518129 (CN)
(74) Representative: Pfenning, Meinig & Partner mbB
(86) International application number: PCT/CN2017/097093
(87) International publication number: WO 2019/028832

(57) **Abstract**

This application provides a method for activating a secondary cell, a communications apparatus, and a network device. The method includes: after receiving an activation command for a secondary cell that is sent by a network device, sending a first uplink signal to the network device using a first period from a first time unit; determining a second time unit; and sending a second uplink signal to the network device using a second period or based on scheduling of the network device after the second time unit, where the second period is greater than the first period. According to the method for activating a secondary cell provided in this application, in a secondary cell activation process, an uplink signal can be sent at a relatively short period, and after the secondary cell is activated, the uplink signal can be sent at a relatively long period or based on scheduling, thereby resolving a problem that network resource consumption and an activation delay are unbalanced in the secondary cell activation process, and improving data transmission efficiency and user experience.

## Description

### TECHNICAL FIELD

This application relates to the communications field, and more specifically, to a method for activating a secondary cell, a communications apparatus, and a network device in the communications field.

### BACKGROUND

In wireless network communication, for user equipment (user equipment, UE), a primary cell (primary cell, PCell) is a cell operating on a primary frequency band. When the UE performs an initial connection establishment process or starts a connection re-establishment process in a cell, the cell is indicated as a primary cell. A secondary cell (secondary cell, SCell) is a cell operating on a secondary frequency band. After an initial security activation procedure (initial security activation procedure), the secondary cell is added/modified/released by using a radio resource control (radio resource control, RRC) connection reconfiguration message. Once an RRC connection is established, the secondary cell may be configured to provide additional radio resources.

Currently, in a secondary cell activation process, a terminal device first receives an RRC connection reconfiguration message sent by a network device, and if the RRC connection reconfiguration message includes secondary cell adding signaling, the terminal device adds a carrier in the RRC connection reconfiguration message as the secondary cell. Subsequently, the terminal device receives an activation command for the secondary cell, indicating that an activation process starts. After completing hardware preparation work, to be specific, the activation process, the terminal device sends an uplink (uplink, UL) signal to the network device, to notify the network device that the secondary cell is successfully activated. After correctly receiving the uplink signal, the network device sends a scheduling command (signaling or data) to the terminal device. The signaling or the data is used to instruct the terminal device to receive or send the data. Then, the uplink signal continues to be sent based on configuration information in the RRC connection reconfiguration message. Alternatively, when no resource for sending the uplink signal is configured for the terminal device or a configured sending period of the uplink signal is relatively long, the network device also sends signaling or data to the terminal device after a maximum activation time configured in a system expires. When the sending period of the uplink signal is relatively long, an activation delay is relatively high. When the sending period of the uplink signal is relatively short, many network resources are consumed for sending the uplink signal.

### SUMMARY

This application provides a method for activating a secondary cell, a communications apparatus, and a network device, so that in a secondary cell activation process, an uplink signal can be sent at a relatively short period, and after the secondary cell is activated, the uplink signal can be sent at a relatively long period or based on scheduling, thereby resolving a problem that consumption of network resources and an activation delay are unbalanced in the secondary cell activation process or after the secondary cell is activated, and improving data transmission efficiency and user experience.

According to a first aspect, a method for activating a secondary cell is provided, and the method includes: after receiving an activation command for a secondary cell that is sent by a network device, sending, by a terminal device, a first uplink signal to the network device using a first period from a first time unit; determining, by the terminal device, a second time unit, where the second time unit is a time unit at which a maximum activation time expires or a time unit at which signaling or data sent by the network device is received; and sending, by the terminal device, a second uplink signal using a second period after the second time unit. The second period is greater than the first period. Alternatively, the terminal device sends the second uplink signal to the network device based on scheduling of the network device after the second time unit.

According to the method for activating a secondary cell provided in the first aspect, in a secondary cell activation process, that is, in a time period from the first time unit at which the terminal device receives the activation command to the time unit at which the terminal device receives a scheduling command or the maximum activation time expires, the first uplink signal is sent to the network device at the first period, and a probability that the network device receives the first uplink signal used to notify that the secondary cell has been activated is increased, so that the network device can receive the first uplink signal earlier, and send the scheduling command to the terminal device earlier based on the first uplink signal. This shortens time used by the network device to learn that the secondary cell has been successfully activated, and reduces an activation delay. After receiving the scheduling command, the terminal device sends the second uplink signal at the relatively long second period or based on the scheduling of the network device, and network resources consumed for sending the second uplink signal are reduced, thereby resolving a problem that consumption of the network resources and the activation delay are unbalanced in the secondary cell activation process or after the secondary cell is activated, and improving data transmission efficiency and user experience.

In a possible implementation of the first aspect, before the terminal device receives the activation command for the secondary cell, the method further includes: receiving, by the terminal device, a configuration message of the secondary cell that is sent by the network device, where the configuration message includes at least one of configuration information of the second period and configuration information of the scheduling of the network device, and configuration information of the first period.

In a possible implementation of the first aspect, the first uplink signal includes first channel state information CSI and/or a first sounding reference signal SRS, and the second uplink signal includes second CSI and/or a second SRS.

In a possible implementation of the first aspect, the first time unit is a time unit at which the terminal device is capable of sending the first uplink signal to the network device.

In a possible implementation of the first aspect, the first period is 1 ms or one TTI, one slot, or one sTTI.

According to a second aspect, a method for activating a secondary cell is provided, and the method includes: after a network device sends an activation command for a secondary cell to a terminal device, receiving, by the network device, a first uplink signal sent by the terminal device, using a first period from a first time unit; determining, by the network device, a second time unit, where the second time unit is a time unit at which a maximum activation time expires or a time unit at which a scheduling command is sent to the terminal device; and receiving, by the network device, a second uplink signal sent by the terminal device, using a second period or based on scheduling of the network device after the second time unit, where the second period is greater than the first period.

According to the method for activating a secondary cell provided in the second aspect, the network device receives the first uplink signal at the relatively short first period in a time period from the first time unit at which the network device sends the activation command to the time unit at which the network device sends the scheduling command or the maximum activation time expires, and a probability that the network device receives the first uplink signal used to notify that the secondary cell has been activated is increased, so that the network device can receive the first uplink signal earlier. This shortens time used by the network device to learn that the secondary cell has been successfully activated, and reduces an activation delay. After sending the scheduling command, the network device receives the second uplink signal at the relatively long second period or based on the scheduling of the network device, and network resources consumed for the second uplink signal are reduced, thereby resolving a problem that consumption of the network resources and the activation delay are unbalanced in a secondary cell activation process or after the secondary cell is activated, and improving data transmission efficiency and user experience.

In a possible implementation of the second aspect, before the network device sends the activation command for the secondary cell to the terminal device, the method further includes: sending, by the network device, a configuration message of the secondary cell to the terminal device, where the configuration message includes at least one of configuration information of the second period and configuration information of the scheduling of the network device, and configuration information of the first period.

In a possible implementation of the second aspect, the first uplink signal includes first channel state information CSI and/or a first sounding reference signal SRS, and the second uplink signal includes second CSI and/or a second SRS.

In a possible implementation of the second aspect, the first time unit is a time unit at which the terminal device is capable of sending the first uplink signal to the network device.

In a possible implementation of the second aspect, the first period is 1 ms or one TTI, one slot, or one short TTI.

According to a third aspect, a method for activating a secondary cell is provided, and the method includes: sending, by a network device, an activation command for a secondary cell to a terminal device at a third time unit; sending, by the network device, a first pilot signal to the terminal device using a first period from the third time unit; determining, by the network device, a fourth time unit, where the fourth time unit is a time unit at which a maximum activation time expires or a time unit at which the network device sends a scheduling command to the terminal device; and sending, by the network device, a second pilot signal to the terminal device using a second period after the fourth time unit, where the second period is greater than the first period.

According to the method for activating a secondary cell provided in the third aspect, in a secondary cell activation process, that is, in a time period in which the network device sends the activation command and sends the scheduling command, the network device sends the first pilot signal to the terminal device at the relatively short first period, and a probability that the terminal device receives the first pilot signal used for downlink synchronization is increased, so that the terminal device can complete the downlink synchronization earlier, and further complete hardware preparation work earlier. In this way, the terminal device is capable of sending, to the network device earlier, an uplink signal used to notify that the secondary cell has been successfully activated, and the network device is capable of sending the scheduling command earlier based on the uplink signal. This can reduce time used by the network device to learn that the secondary cell has been successfully activated, and reduce an activation delay. After sending the scheduling command, the network device sends the second pilot signal at the relatively long second period, so that network resources consumed for sending the second pilot signal are reduced, thereby resolving a problem that consumption of the network resources and the activation delay are unbalanced in the secondary cell activation process or after the secondary cell is activated, and improving data transmission efficiency and user experience.

In a possible implementation of the third aspect, before the network device sends the activation command for the secondary cell, the method further includes: sending, by the network device, a configuration message of the secondary cell to the terminal device, where the configuration message includes configuration information of the first period and configuration information of the second period.

In a possible implementation of the third aspect, the first pilot signal includes a first demodulation reference signal DMRS and/or a first beam pilot signal, and the second pilot signal includes a second DMRS and/or a second beam pilot signal.

According to a fourth aspect, a method for activating a secondary cell is provided, and the method includes: receiving, by a terminal device at a third time unit, an activation command for a secondary cell that is sent by a network device; receiving, by the terminal device, a first pilot signal sent by the network device, using a first period from the third time unit; determining, by the terminal device, a fourth time unit, where the fourth time unit is a time unit at which a maximum activation time expires or a time unit at which the terminal device receives a scheduling command sent by the network device; and receiving, by the terminal device, a second pilot signal sent by the network device, using a second period after the fourth time unit, where the second period is greater than the first period.

According to the method for activating a secondary cell provided in the fourth aspect, the terminal device receives the first pilot signal at a relatively short first period in a time period in which the terminal device receives the activation command and the scheduling command, and a probability that the terminal device receives the first pilot signal used for downlink synchronization is increased, so that the terminal device can complete the downlink synchronization earlier, and further complete hardware preparation work earlier. In this way, the terminal device is capable of sending, to the network device earlier, an uplink signal used to notify that the secondary cell has been successfully activated, time used by the network device to learn that the secondary cell has been successfully activated can be reduced, and an activation delay can be reduced. After receiving the scheduling command, the terminal device receives the second pilot signal at the relatively long second period, and network resources consumed by the second pilot signal are reduced, thereby resolving a problem that consumption of the network resources and the activation delay are unbalanced in a secondary cell activation process or after the secondary cell is activated, and improving data transmission efficiency and user experience.

In a possible implementation of the fourth aspect, before the terminal device receives the activation command for the secondary cell that is sent by the network device, the method further includes: receiving, by the terminal device, a configuration message of the secondary cell that is sent by the network device, where the configuration message includes configuration information of the first period and configuration information of the second period.

In a possible implementation of the fourth aspect, the first pilot signal includes a first demodulation reference signal DMRS and/or a first beam pilot signal, and the second pilot signal includes a second DMRS and/or a second beam pilot signal.

According to a fifth aspect, a method for activating a secondary cell is provided, and the method includes: receiving, by a terminal device, instruction information sent by a network device, where the instruction information is used to instruct the terminal device to start at least one of RRM measurement, CSI measurement, downlink synchronization, and hardware preparation work; starting, by the terminal device based on the instruction information, to perform the RRM measurement, the downlink synchronization, and/or the hardware preparation work; after receiving the instruction information, receiving, by the terminal device at a first time unit, an activation command for a secondary cell that is sent by the network device; and sending, by the terminal device, a first uplink signal to the network device using a first period from the first time unit.

According to the method for activating a secondary cell provided in the fifth aspect, the terminal device does not need to wait to start the hardware preparation work until receiving the activation command for the secondary cell that is sent by the network device, and instead, starts the hardware preparation work before receiving the activation command for the secondary cell and after receiving the instruction information sent by the network device. The instruction information may alternatively be an activation command. In this way, the terminal device can complete the hardware preparation work earlier. After receiving the activation command for the secondary cell, the terminal device sends the first uplink signal to the network device at the first period, so that the network device can learn earlier that the secondary cell has been successfully activated, time used by the network device to learn that the secondary cell has been successfully activated is shortened, an activation delay is reduced, and the network device can schedule the secondary cell earlier.

In a possible implementation of the fifth aspect, the method further includes: determining, by the terminal device, a second time unit, where the second time unit is a time unit at which a maximum activation time expires or a time unit at which a scheduling command sent by the network device is received; and sending, by the terminal device, a second uplink signal to the network device using a second period or based on scheduling of the network device after the second time unit, where the second period is greater than the first period. In this implementation, after receiving the activation command for the secondary cell, the terminal device sends the first uplink signal to the network device at the relatively short first period, so that the network device can learn earlier that the secondary cell has been successfully activated, the time used by the network device to learn that the secondary cell has been successfully activated is shortened, and the activation delay is reduced. After receiving the scheduling command or the maximum activation time expires, the terminal device sends the second uplink signal at the relatively long second period or based on the scheduling of the network device, and network resources consumed for sending the second uplink signal are reduced, thereby resolving a problem that consumption of the network resources and the activation delay are unbalanced in the secondary cell activation process or after the secondary cell is activated, and improving data transmission efficiency and user experience.

In a possible implementation of the fifth aspect, after receiving the instruction information, the terminal device starts at least one of the RRM measurement, the CSI measurement, the downlink synchronization, and the hardware preparation work; and the hardware preparation work includes at least one of phase-locked loop adjustment, crystal oscillator adjustment, automatic gain control, and radio frequency chain activation.

In a possible implementation of the fifth aspect, the instruction information and the activation command for the secondary cell are sent in a form of an MAC CE, or sent in a form of physical layer signaling.

In a possible implementation of the fifth aspect, before the terminal device receives the instruction information, the method further includes: receiving, by the terminal device, a configuration message of the secondary cell that is sent by the network device, where the configuration message of the secondary cell includes at least one of: period information of the RRM measurement, a period of the CSI measurement, a configuration of the first period, and configuration information of the second period.

In a possible implementation of the fifth aspect, the first uplink signal includes first channel state information CSI and/or a first sounding reference signal SRS, and the second uplink signal includes second CSI and/or a second SRS.

According to a sixth aspect, a method for activating a secondary cell is provided, and the method includes: sending, by a network device, instruction information to a network device, where the instruction information is used to instruct the terminal device to start at least one of RRM measurement, CSI measurement, downlink synchronization, and hardware preparation work; after sending the instruction information, sending, by the network device, an activation command for a secondary cell to the terminal device at a first time unit; and receiving, by the network device, a first pilot signal sent by the terminal device, using a first period from the first time unit.

According to the method for activating a secondary cell provided in the sixth aspect, before sending the activation command for the secondary cell to the terminal device, the network device sends the instruction information to the terminal device, where the instruction information is used to instruct the terminal device to start the hardware preparation work. The terminal device does not need to wait to start the hardware preparation work until receiving the activation command for the secondary cell that is sent by the network device, and instead, starts the hardware preparation work before receiving the activation command for the secondary cell. The instruction information may alternatively be an activation command. In this way, the terminal device can complete the hardware preparation work earlier. After the network device sends the activation command for the secondary cell, the terminal device sends the first uplink signal to the network device at the first period, so that the network device can learn earlier that the secondary cell has been successfully activated, time used by the network device to learn that the secondary cell has been successfully activated is shortened, an activation delay is reduced, and the network device can schedule the secondary cell earlier.

In a possible implementation of the sixth aspect, the method further includes: determining, by the network device, a second time unit, where the second time unit is a time unit at which a maximum activation time expires or a time unit at which a scheduling command sent by the network device is received; and receiving, by the network device, a second uplink signal sent by the terminal device, using a second period or based on scheduling of the network device after the second time unit, where the second period is greater than the first period. In this implementation, since the network device sends the activation command for the secondary cell, the network device receives, at the relatively short first period, the first uplink signal sent by the terminal device, so that the network device can learn earlier that the secondary cell has been successfully activated, time used by the network device to learn that the secondary cell has been successfully activated is shortened, and an activation delay is reduced. After the network device sends the scheduling command or the maximum activation time expires, the network device receives the second uplink signal sent by the terminal device, at the relatively long second period or based on the scheduling of the network device, and network resources consumed for the second uplink signal are reduced, thereby resolving a problem that consumption of the network resources and the activation delay are unbalanced in a secondary cell activation process or after the secondary cell is activated, and improving data transmission efficiency and user experience.

In a possible implementation of the sixth aspect, before the network device sends the instruction information, the method further includes: sending, by the network device, a configuration message of the secondary cell to the terminal device, where the configuration message of the secondary cell includes at least one of: period information of the RRM measurement, a period of the CSI measurement, a configuration of the first period, and configuration information of the second period.

In a possible implementation of the sixth aspect, the instruction information and the activation command for the secondary cell are sent in a form of an MAC CE, or sent in a form of physical layer signaling.

In a possible implementation of the sixth aspect, the first uplink signal includes first channel state information CSI and/or a first sounding reference signal SRS, and the second uplink signal includes second CSI and/or a second SRS.

According to a seventh aspect, a communications apparatus is provided. The communications apparatus includes a processor, a memory, and a transceiver, to support the communications apparatus in performing a corresponding function in the foregoing method. The processor, the memory, and the transceiver are connected through communication connection, the memory stores an instruction, the transceiver is configured to receive and send a specific signal when driven by the processor, and the processor is configured to invoke the instruction to implement the method for activating a secondary cell in any one of the first aspect, the fourth aspect, or the fifth aspect and the implementations of the first aspect, the fourth aspect, and the fifth aspect.

According to an eighth aspect, a communications apparatus is provided, and the communications apparatus includes a processing module, a storage module, and a transceiver module that are configured to support the communications apparatus in performing a function of the terminal device in any one of the first aspect or the possible implementations of the first aspect, a function of the terminal device in any one of the fourth aspect or the possible implementations of the fourth aspect, or a function of the communications apparatus in any one of the fifth aspect or the possible implementations of the fifth aspect. The function may be implemented by hardware, or may be implemented by hardware by executing corresponding software. The hardware or software includes one or more modules corresponding to the function.

According to a ninth aspect, a network device is provided. The network device includes a processor, a memory, and a transceiver that are configured to support the network device in performing a corresponding function in the foregoing method. The processor, the memory, and the transceiver are connected through communication, the memory stores an instruction, the transceiver is configured to receive and send a specific signal when driven by the processor, and the processor is configured to invoke the instruction to implement the method for activating a secondary cell in any one of the second aspect, the third aspect, or the sixth aspect and the implementations of the second aspect, the third aspect, and the sixth aspect.

According to a tenth aspect, a network device is provided, and the network device includes a processing module, a storage module, and a transceiver module that are configured to support a network device in performing a function of the network device in any one of the second aspect or the possible implementations of the second aspect, a function of the network device in any one of the third aspect or the possible implementation of the third aspect, or a function of the terminal device in any one of the sixth aspect or the possible implementation of the sixth aspect. The function may be implemented by hardware, or may be implemented by hardware by executing corresponding software. The hardware or software includes one or more modules corresponding to the function.

According to an eleventh aspect, a communications system is provided. The communications system includes the communications apparatus provided in the seventh aspect or the eighth aspect and the network device provided in the ninth aspect or the tenth aspect. The communications system may complete the methods for activating a secondary cell according to the first aspect, the second aspect, the third aspect, the fourth aspect, the fifth aspect, and the sixth aspect.

According to a twelfth aspect, a computer-readable storage medium is provided, and the computer-readable storage medium is configured to store a computer program, where the computer program includes an instruction used to perform the method in any one of the first aspect or the possible implementations of the first aspect, the method in any one of the fourth aspect or the possible implementations of the fourth aspect, and the method in any one of the fifth aspect or the possible implementations of the fifth aspect.

According to a thirteenth aspect, a computer-readable storage medium is provided, and the computer-readable storage medium is configured to store a computer program, where the computer program includes an instruction used to perform the method in any one of the second aspect or the possible implementations of the second aspect, the method in any one of the third aspect or the possible implementations of the third aspect, and the method in any one of the sixth aspect or the possible implementations of the sixth aspect.

### BRIEF DESCRIPTION OF DRAWINGS

FIG. 1 is a schematic diagram of different carrier aggregation modes;
FIG. 2 is a schematic flowchart for activating a secondary cell in the prior art;
FIG. 3 is a schematic diagram of a typical application scenario according to an embodiment of the present invention;
FIG. 4 is a schematic flowchart for a method for activating a secondary cell according to an embodiment of the present invention;
FIG. 5 is a schematic flowchart for a method for activating a secondary cell according to another embodiment of the present invention;
FIG. 6 is a schematic flowchart for a method for activating a secondary cell according to still another embodiment of the present invention;
FIG. 7 is a schematic block diagram of a communications apparatus according to an embodiment of the present invention;
FIG. 8 is a schematic block diagram of a communications apparatus according to another embodiment of the present invention;
FIG. 9 is a schematic block diagram of a network device according to an embodiment of the present invention;
FIG. 10 is a schematic block diagram of a network device according to another embodiment of the present invention;
FIG. 11 is a schematic block diagram of a network device according to an embodiment of the present invention;
FIG. 12 is a schematic block diagram of a network device according to another embodiment of the present invention;
FIG. 13 is a schematic block diagram of a communications apparatus according to an embodiment of the present invention;
FIG. 14 is a schematic block diagram of a communications apparatus according to another embodiment of the present invention;
FIG. 15 is a schematic block diagram of a communications apparatus according to an embodiment of the present invention;
FIG. 16 is a schematic block diagram of a communications apparatus according to another embodiment of the present invention;
FIG. 17 is a schematic block diagram of a network device according to an embodiment of the present invention; and
FIG. 18 is a schematic block diagram of a network device according to another embodiment of the present invention.

### DESCRIPTION OF EMBODIMENTS

The following describes the technical solutions of this application with reference to the accompanying drawings.

The technical solutions of the embodiments of this application may be applied to various communications systems, such as a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a future 5th generation (5th generation, 5G) system, or a new radio (new radio, NR) system.

A communications apparatus in the embodiments of this application may be a terminal device, user equipment, an access terminal, a subscriber unit, a subscriber station, a mobile station, a remote station, a remote terminal, a mobile device, a user terminal, a terminal, a wireless communications device, a communications apparatus, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communications function, a computing device, another processing device connected to a wireless modem, a vehicle-mounted device, a wearable device, a terminal device in a future 5G network, or a terminal device in a future evolved public land mobile network (public land mobile network, PLMN). This is not limited in the embodiments of this application.

A network device in the embodiments of this application may be a device configured to communicate with the terminal device. The network device may be a base transceiver station (base transceiver station, BTS) in the global system for mobile communications (global system of mobile communication, GSM) system or the code division multiple access (code division multiple access, CDMA) system, or may be a NodeB (NodeB, NB) in the wideband code division multiple access (wideband code division multiple access, WCDMA) system, or may be an evolved NodeB (evolutional NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in the future 5G network, a network device in the future evolved PLMN network, or the like. This is not limited in the embodiments of this application.

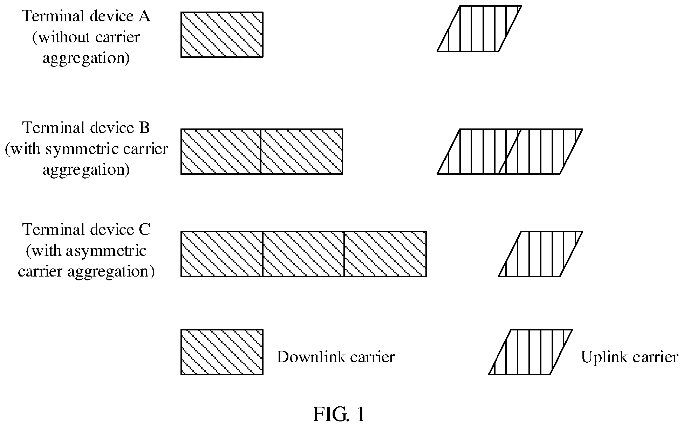

For a terminal device, a primary cell is a cell operating on a primary frequency band (a primary carrier), and a secondary cell is a cell operating on a secondary frequency band (a secondary carrier). A serving cell (serving cell) of the terminal device may be a secondary cell, or may be a primary cell. For a terminal device on which carrier aggregation (carrier aggregation, CA) is not configured, there is only one serving cell, that is, a primary cell. For a terminal device on which CA is configured, a serving cell is a cell set including a primary cell and a secondary cell. A terminal device on which CA is configured is connected to one primary cell and a maximum of four secondary cells. FIG. 1 is a schematic diagram of different carrier aggregation modes. In FIG. 1, for a terminal device A, CA is not supported, and therefore, there is only one cell, that is, one uplink carrier and one downlink carrier. For a terminal device B, a symmetric CA mode is configured, two carriers are aggregated, and two uplink carriers and two downlink carriers are supported. For a terminal device C, an asymmetric CA mode is configured, and there are three downlink carriers and one uplink carrier. In the carrier aggregation mode, a quantity of downlink carriers supported by a terminal device is greater than or equal to a quantity of uplink carriers. Currently, carrier aggregation can support aggregation of a maximum of 32 carriers. In a future 5G network, the carrier aggregation may support more carriers, that is, more secondary cells need to be added (activated) for the terminal device.

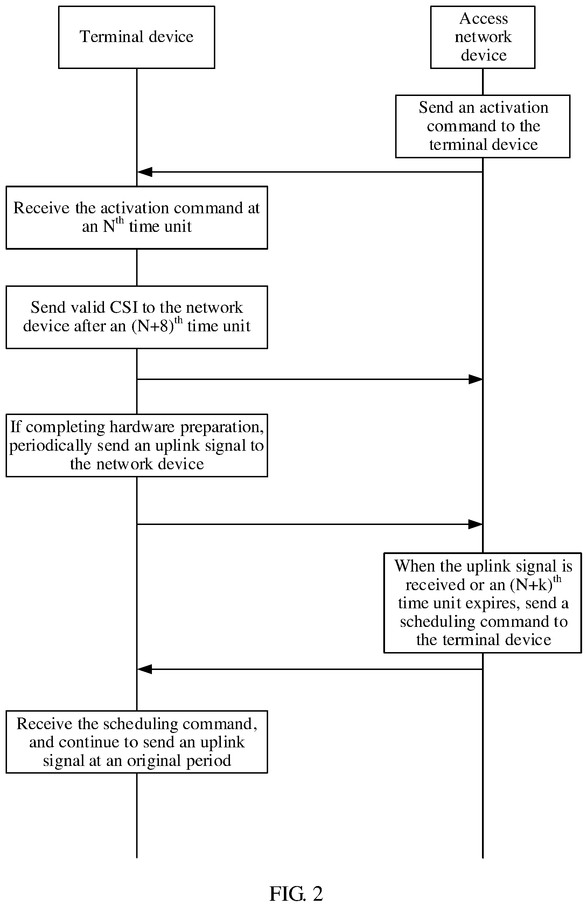

FIG. 2 is a schematic flowchart for activating a secondary cell in the prior art. A terminal device first receives an RRC reconfiguration message, and after receiving the RRC reconfiguration message, if the RRC reconfiguration message includes SCell adding signaling, UE adds a carrier in the reconfiguration message as a carrier in which a secondary cell is located. However, the secondary cell is in an inactive state, and in the inactive state, the terminal device does not send an uplink signal such as a sounding reference signal (sounding reference signal, SRS) in the secondary cell; does not send UL data in the secondary cell; does not send a channel quality indicator (channel quality indicator, CQI)/precoding matrix indicator (precoding matrix indicator, PMI)/rank indicator (rank indication, RI) of the secondary cell; does not listen to a physical downlink control channel (physical downlink control channel, PDCCH) of the secondary cell, including scheduling performed on the secondary cell and scheduling of a control channel of the secondary cell; does not perform a random access process; and if a physical uplink control channel (physical uplink control channel, PUCCH) is configured, does not perform transmission on the physical uplink control channel (physical uplink control channel, PUCCH). The terminal device does not send data on an uplink shared channel (uplink shared channel) of the secondary cell. As shown in FIG. 2, the terminal device receives an activation command for the secondary cell at a T^{th} time unit, and completes processing processes such as receiving and related decoding of the activation command in subsequent 4 ms. After a (T+8)^{th} time unit, valid channel state information (channel state information, CSI) is sent to the network device, to report a channel state of a current cell to the network device. Between the (T+8)^{th} time unit and a (T+k)^{th} time unit, if the terminal device completes hardware preparation work, for example, phase-locked loop adjustment, crystal oscillator adjustment, automatic gain control, and radio frequency chain activation, that is, after the secondary cell is activated, the terminal device periodically sends an uplink signal to the network device, to notify the network device that the secondary cell has been successfully activated. For example, the uplink signal includes CSI and/or an SRS. A time at which the network device receives the uplink signal may be earlier than the (T+k)^{th} time unit, or may be later than the (T+k)^{th} time unit. A value of k is 24 or 34. When the value of k is 24, it indicates that the secondary cell to be activated has reported a valid measurement report. When the value of k is 34, it indicates that the secondary cell to be activated has not reported a valid measurement report previously. The value of k is a maximum activation time configured by a system, that is, when the (T+k)^{th} time unit expires, even if the network device does not correctly receive the uplink signal, the network device sends a scheduling command (signaling or data) to the terminal device, to schedule the terminal device to receive or send data. The maximum activation time is specified or predefined in a protocol, and is a maximum time taken from receiving the activation command by the terminal device to activating the secondary cell by the terminal device, for example, n+24 milliseconds or n+34 milliseconds as defined in 3GPP 36.133.

Therefore, provided that either of two conditions: the network device receives the uplink signal or the (T+k)^{th} time unit expires, is met, the network device considers that the secondary cell of the terminal device has been activated, and data scheduling starts to be performed in the secondary cell. After the terminal device receives the scheduling command, the terminal device continues to send the uplink signal at a configured period, sends the CQI/PMI/RI/ of the secondary cell to the network device, listens to the PDCCH of the secondary cell and/or sends data on the PUCCH, and enables a deactivation timer of another secondary cell to trigger an action such as reporting power headroom of the secondary cell.

In an existing secondary cell activation process, when a configured sending period of the uplink signal is relatively long or no resource for sending the uplink signal is configured, the network device can only wait to schedule the secondary cell of the terminal device after a configured maximum activation time expires (that is, the (T+k) time unit expires). This causes a scheduling delay. However, when the configured sending period of the uplink signal is relatively short, after the secondary cell is activated, because the uplink signal is sent still at an original period, relatively severe consumption of network resources is caused.

Based on the foregoing problem, the embodiments of the present invention provide a method for activating a secondary cell, to resolve a problem that the consumption of the network resources and an activation delay are unbalanced in the secondary cell activation process, and improve data transmission efficiency and user experience.

It should be understood that, for a 5G or a new radio access network (new radio access network, NR) system, one or more transmission and reception points (transmission reception point, TRP) may exist in one NR NodeB (NR-NB), and all TRPs belong to a same cell. Each TRP and each terminal device may use the method for activating a secondary cell in the embodiments of this application. In another scenario, the network device may further be divided into a control unit (control unit, CU) and a data unit (data unit, DU). There may be a plurality of DUs in one CU. Each DU and each terminal device may use the method for activating a secondary cell described in the embodiments of this application. A difference between a CU-DU separation scenario and a multi-TRP scenario lies in that, the TRP is merely one radio frequency unit or one antenna device, and the DU can implement a protocol stack function, for example, the DU can implement a physical layer function.

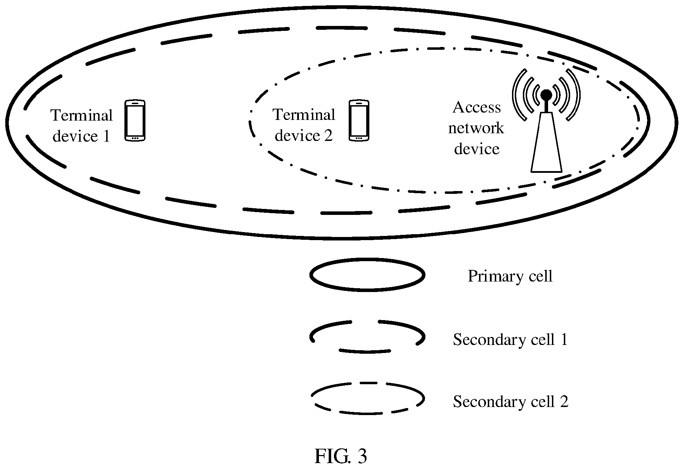

FIG. 3 is a schematic diagram of a typical application scenario according to an embodiment of the present invention. As shown in FIG. 3, the technical solutions of this application may be applied to a secondary cell activation process performed between a network device and a terminal device. Serving cells of a terminal device 1 and a terminal device 2 are served by a same network device. The terminal device 1 and the terminal device 2 are separately connected to a plurality of carriers of the network device. The serving cell of the terminal device 2 includes a primary cell and two secondary cells (a secondary cell 1 and a secondary cell 2), and the serving cell of the terminal device 1 includes the primary cell and the secondary cell 1. At least some of the plurality of cells (carriers) separately form the serving cells of the terminal device 1 and the terminal device 2.

It should be understood that this embodiment of the present invention is described merely by using the application scenario shown in FIG. 3 as an example, but this embodiment of the present invention is not limited thereto. For example, a system may include more terminal devices and carriers.

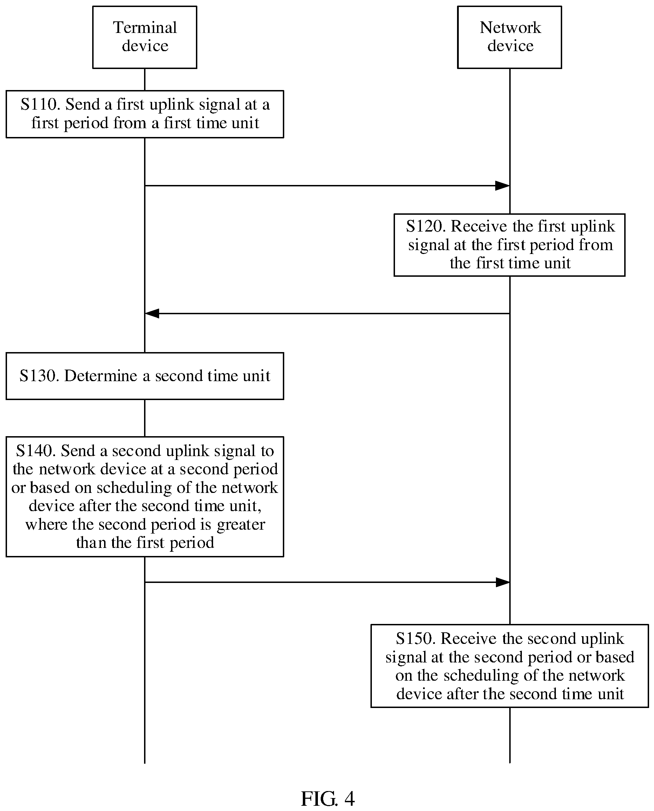

The following describes in detail the method for activating a secondary cell according to this application with reference to FIG. 4. FIG. 4 is a schematic flowchart for a method 100 for activating a secondary cell according to an embodiment of the present invention. The method 100 may be applied to the scenario shown in FIG. 3, or may certainly be applied to another communication scenario. This is not limited in this embodiment of the present invention.

As shown in FIG. 4, the method 100 includes the following steps:
S110. After receiving an activation command for a secondary cell that is sent by a network device, a terminal device sends a first uplink signal to the network device using a first period from a first time unit.
S120. The network device receives the first uplink signal at the first period from the first time unit.
S130. The terminal device determines a second time unit, where the second time unit is a time unit at which a maximum activation time expires or a time unit at which a scheduling command sent by the network device is received.
S140. The terminal device sends a second uplink signal to the network device using a second period or based on scheduling of the network device after the second time unit, where the second period is greater than the first period.
S150. The network device receives the second uplink signal at the second period or based on the scheduling of the network device from the second time unit.

According to the method for activating a secondary cell provided in this embodiment of the present invention, in an activation process, that is, in a time period from the first time unit at which the terminal device receives the activation command to the time unit at which the terminal device receives the scheduling command or the maximum activation time expires, the first uplink signal is sent to the network device at the relatively short first period, and a probability that the network device receives the first uplink signal used to notify that the secondary cell has been activated is increased, so that the network device can receive the first uplink signal earlier, and send the scheduling command to the terminal device earlier based on the first uplink signal. This shortens time used by the network device to learn that the secondary cell has been successfully activated, and reduces an activation delay, so that the network device can schedule the secondary cell earlier. After receiving the scheduling command (signaling or data) or the maximum activation time expires, the terminal device sends the second uplink signal at the relatively long second period or based on the scheduling of the network device, and network resources consumed for the second uplink signal are reduced, thereby resolving a problem that consumption of the network resources and the activation delay are unbalanced in a secondary cell activation process or after the secondary cell is activated, and improving data transmission efficiency and user experience.

Specifically, in S110, the network device sends the activation command for the secondary cell to the terminal device. Correspondingly, after receiving the activation command for the secondary cell, the terminal device sends the first uplink signal to the network device at the first period from the first time unit. In a time period from the time unit at which the terminal device receives the activation command for the secondary cell to the first time unit, the terminal device completes receiving of the activation command for the secondary cell, that is, performs processing such as demodulation and decoding.

It should be understood that the first time unit is a time unit at which the terminal device is capable of sending the first uplink signal, namely, a time unit at which the terminal device is capable of sending the first uplink signal and has a capability of sending the first uplink signal. It should be understood that, at the first time unit, the terminal device only has the capability of starting to send the first uplink signal, and the terminal device may alternatively start to send the first uplink reference signal at a time unit after the first time unit. This is not limited in this embodiment of the present invention. After receiving the activation command, the terminal device sends a valid CSI report to the network device. The first uplink signal may include the valid CSI report. Optionally, the first time unit may be a time unit at which the valid CSI report is sent. The valid CSI report is used to notify the network device of a channel state of a carrier on which the secondary cell is located. After receiving the activation command, the terminal device starts to perform hardware preparation work such as phase-locked loop adjustment, crystal oscillator adjustment, automatic gain control, and radio frequency chain activation. The terminal device completes the hardware preparation work, indicating that the secondary cell has been successfully activated.

It should be understood that the first time unit may be a time unit at which the terminal device completes the hardware preparation, the first time unit may be a time unit before the terminal device completes the hardware preparation, or the first time unit may be a time unit at which the terminal device is capable of sending the first uplink signal and has a capability of sending an SRS, performing PDCCH detection, and reporting power headroom. This is not limited in this embodiment of the present invention.

It should be further understood that, in this application, a time unit and a moment may express a same meaning, and both may be used to represent a time node and may be replaced with each other. For example, the first time unit may be a first moment, and the first time unit may be in a subframe, a slot (slot), a mini-slot (mini-slot), or a short transmission time interval (short transmission time interval, sTTI). This is not limited in this embodiment of the present invention.

It should be further understood that, the activation command for the secondary cell may be sent in a media access control channel element (media access control channel element, MAC CE), or may be sent on a PDCCH. This is not limited in this embodiment of the present invention.

It should be further understood that, the secondary cell may be in a cell form and used to send a primary synchronization signal, a secondary synchronization signal, and a broadcast message, or the secondary cell may be in a beam form and used to send a beam pilot signal. The beam pilot signal is sent at a specific period, or the secondary cell may be in a form of a distribution unit (distribute unit). The distribution unit includes only a user plane. The distribution unit is connected to a central unit (central unit), and the central unit provides control plane information.

It should be further understood that, secondary cell adding or modification signaling in the activation command for the secondary cell may be sent in a form of an index of a secondary cell group, or may be sent in a form of an index of a single secondary cell. This is not limited in this embodiment of the present invention.

Because the terminal device already has the capability of sending the first uplink signal at the first time unit, that is, the terminal device is capable of sending (be capable to transmit) the first uplink signal, the terminal device sends the first uplink signal to the network device at the first period from the first time unit, to notify the network device that the secondary cell has been successfully activated. Correspondingly, in S120, the network device also receives the first uplink signal sent by the terminal device, at the first period from the first time unit.

Optionally, the first time unit may be the eighth subframe after a time unit at which the activation command for the secondary cell is received, and this indicates that the terminal device sends a valid CSI report (transmit valid CSI report) as early as in the eighth subframe. Alternatively, a value of the first time unit may be another value. For different resources, parameter configurations are different. The parameter configuration may be referred to as a "numerology". For example, cyclic prefix (cyclic prefix, CP) lengths, transmission time intervals (transmission time interval, TTI), subcarrier spacings, quantities of symbols (symbol), resource block (resource block, RB) locations, slot lengths, and frame formats configured for different services are different. Therefore, duration between the first time unit and the time unit at which the activation command for the secondary cell is received may also be values corresponding to different numerologies. For example, for a TTI length of two symbols, the duration between the first time unit and the time unit at which the activation command for the secondary cell may be 16 TTIs, and for a TTI length of 1 ms, the duration between the first time unit and the time unit at which the activation command for the secondary cell may be eight subframes of 1 ms. This is not limited in this embodiment of the present invention.

It should be understood that the terminal device may alternatively send the first uplink signal to the network device at a time unit after the first time unit. For example, the first uplink signal may be sent to the network device from the time unit at which the terminal device completes the hardware preparation. Alternatively, the first time unit may be a time unit before the terminal device completes the hardware preparation, or may be a time unit after the terminal device completes the hardware preparation. This is not limited in this embodiment of the present invention.

In S130, the terminal device determines the second time unit, where the second time unit is a time unit at which the maximum activation time expires or a time unit at which the scheduling command sent by the network device is received, and the second time unit is after the first time unit.

Specifically, after successfully receiving the first uplink signal, the network device sends the scheduling command to the terminal device, to schedule the terminal device to receive or send data. The second time unit may be a time unit at which the terminal device receives the scheduling command. The scheduling command may be signaling or data. Alternatively, the second time unit may be a time unit at which the network device correctly receives the first uplink signal. Alternatively, maximum activation duration is configured in configuration information of a system, and the maximum activation time is specified or predefined in a protocol and is a maximum time from a time point at which the terminal device receives the activation command to a time point at which the terminal device activates the secondary cell, for example, n+24 milliseconds or n+34 milliseconds as defined in 3GPP 36.133. A latest time for activating the secondary cell can be no later than (no later than) the maximum activation time.

When the time unit of the maximum activation time (the latest activation time) expires, the network device sends the scheduling command to the terminal device regardless of whether the network device correctly receives the first uplink signal. Therefore, the second time unit may be the time unit at which the maximum activation time expires. For example, a value of the maximum activation duration may be 24 ms or 34 ms, may be 24 sTTIs or 34 sTTIs, may be 24 slots or 34 slots, or the like. This is not limited in this embodiment of the present invention.

In S140, the terminal device sends the second uplink signal to the network device at the second period after the second time unit, where the second period is greater than the first period, or sends the second uplink signal to the network device based on the scheduling of the network device. This is not limited herein.

In S150, the network device receives the first uplink signal at the second period from the second time unit.

Specifically, in S140, after the second time unit, the second uplink signal does not need to be frequently sent to the network device as what has been done previously to activate the secondary cell. Therefore, the terminal device sends the second uplink signal to the network device at the second period or based on the scheduling of the network device. The second period is greater than the first period. "Based on the scheduling of the network device" may be understood as that when the network device needs information about the terminal device, the network device sends scheduling information to the terminal device, and when receiving the scheduling information, the terminal device reports the second uplink signal to the network device. "Based on the scheduling of the network device" means that the network device performs scheduling based on a PDCCH/ or a MAC CE. The second uplink signal is used by the network device to perform coherent demodulation and detection, and measure channel quality and the like, to facilitate subsequent data transmission. This reduces consumption of network resources. Correspondingly, in S150, the network device receives the second uplink signal at the second period or based on the scheduling of the network device.

It should be understood that after the second time unit, the terminal device may alternatively stop sending the second uplink signal to the network device, for example, when the terminal device is in a static state or a state in which no data is to be sent. Alternatively, the second uplink signal may be reported to the network device in another manner in which the consumption of the network resources can be reduced, for example, an aperiodic manner. This is not limited in this embodiment of the present invention.

It should be further understood that the terminal device periodically receives, from the time at which the terminal device receives the activation command for the secondary cell or after a time at which the terminal device receives the activation command for the secondary cell, a pilot signal sent by the network device. The pilot signal is used to notify the terminal device of related information of the secondary cell, so that the terminal device can quickly implement downlink synchronization with the secondary cell, to complete the hardware preparation work earlier, and send the first uplink signal to the network device earlier. It may be understood that, if the terminal device receives the pilot signal earlier, the terminal device can complete the downlink synchronization earlier, and can complete the hardware preparation work earlier, that is, complete activation of the secondary cell earlier. In this way, the terminal device is capable of sending the first uplink signal to the network device earlier. To be specific, in an activation process, the network device sends the pilot signal at a relatively short period, and the terminal device sends the first uplink signal at the relatively short first period. This can more effectively shorten time used to notify the network device that the secondary cell has been activated, so that the network device can learn of a notification earlier that the secondary cell has been activated. After the second time unit, the network device sends the pilot signal at a relatively long period, and the terminal device sends the second uplink signal at the relatively long second period or based on the scheduling, so that the network resources can be more effectively saved.

It should be further understood that the first period may be a period specified in a system, and may be, for example, 1 ms or one TTI, or may be another value. Optionally, a shorter first period indicates a shorter activation time. For example, the first period is one slot, one sTTI, or the like. This is not limited in this embodiment of the present invention. The second period is greater than the first period. Optionally, a longer second period indicates less consumption of the network resources.

According to the method for activating a secondary cell provided in this embodiment of the present invention, in a process of activating the secondary cell, the terminal device sends the first uplink signal to the network device at the first period, and an action that the terminal device sends the first uplink reference signal that is used to notify the network device that the secondary cell has been activated is added. Therefore, the network device is capable of sending the scheduling command earlier based on the first uplink signal, thereby reducing the activation delay. After receiving the scheduling command, the terminal device sends the second uplink signal at the relatively long second period or based on the scheduling of the network device, and the network resources consumed for sending the second uplink signal are reduced. When resource consumption is reduced, the network device can be rapidly notified that the secondary cell has been activated, and the activation delay is reduced, thereby resolving a problem that the consumption of the network resources and the activation delay are unbalanced during activation of the secondary cell, and improving data transmission efficiency and user experience.

Optionally, in an embodiment, before S 110, the method further includes:

S109. The network device sends a configuration message of the secondary cell to the terminal device, where the configuration message includes at least one of configuration information of the second period and configuration information of the scheduling of the network device, and configuration information of the first period.

Specifically, before the network device sends the activation command to the terminal device, the network device sends the configuration message of the secondary cell to the terminal device. The configuration message of the secondary cell may be an RRC reconfiguration message. The configuration message includes secondary cell adding or modification signaling. For example, the terminal device adds, based on the secondary cell adding signaling, a carrier in the configuration message as a carrier on which the secondary cell is located, and then the secondary cell will be in an inactive state. The configuration message includes at least one of the configuration information of the second period and the configuration information of the scheduling of the network device, and the configuration information of the first period. After obtaining the configuration information, the terminal device sends the first uplink signal and the second uplink signal according to a protocol specification, and based on the configuration message or other instruction information used to instruct the terminal device to send the first uplink signal and the second uplink signal at the first period and the second period, and based on the scheduling of the network device. For example, the instruction information may instruct the terminal device to send the first uplink signal in different manners in different time segments. The terminal device sends the first uplink signal and the second uplink signal in different manners in different time segments based on the configuration information. The network device also receives the first uplink signal and the second uplink signal in different manners in different time segments according to the protocol specification or the configuration information.

It should be understood that information such as the first period and the second period, information about the scheduling of the network device, and information about stopping sending the second uplink signal may be indicated to the terminal device by using the configuration message, or may be negotiated by the network device and the terminal device in advance, to be specific, preconfigured by the system. This is not limited in this embodiment of the present invention.

It should be further understood that the configuration message may further include instruction information used to instruct whether the terminal device needs to send the first uplink signal and the second uplink signal at different periods in different time segments. For example, the instruction information may instruct the terminal device to send the first uplink signal and the second uplink signal always in a same manner or at a same period, or send the first uplink signal and the second uplink signal in different time segments at different periods that are included in the configuration message. This is not limited in this embodiment of the present invention.

It should be further understood that the configuration information such as the first period and the second period, information about the scheduling of the network device, and information about stopping sending the second uplink signal may alternatively be indicated, by using a broadcast message, to the terminal device and another terminal device that is located in coverage of a same network device as the terminal device. This is not limited in this embodiment of the present invention.

It should be further understood that, the configuration message may include any one of the configuration information of the second period, the configuration information of the scheduling of the network device, and the configuration information about stopping sending the second uplink signal. The configuration message may further include any combination of the foregoing three types of configuration information, and the terminal device selects one type of the configuration information based on other information or condition or performs different manners in different time segments. This is not limited in this embodiment of the present invention.

Optionally, in an embodiment, the first uplink signal includes first channel state information CSI and/or a first sounding reference signal SRS, and the second uplink signal includes second CSI and/or a second SRS.

Specifically, after the terminal device completes the hardware preparation work, the first uplink signal sent by the terminal device to the network device may include the first CSI and/or the first SRS. The first CSI is used to notify the network device of a channel state of a primary cell and a channel state of a secondary cell that are of the terminal device, to facilitate uplink channel quality measurement to be performed by the network device. The first SRS provides a reference for the scheduling of the network device, and reference content may be channel quality of the primary cell and channel quality of the secondary cell. The network device sends, to the terminal device based on the first CSI and/or the first SRS, the scheduling command for scheduling the secondary cell.

The second uplink signal includes second CSI and/or a second SRS, and is used to report channel state information of the primary cell and the secondary cell to the network device after the secondary cell has been activated and used for coherent demodulation and detection to be performed by the network device, so that the network device and the terminal device effectively transmit data.

It should be understood that the second CSI and the first CSI may be the same, or may be different. The second SRS and the first SRS may be the same, or may be different. This is not limited in this embodiment of the present invention.

It should be further understood that the first CSI and the second CSI may be sent in another cell or the secondary cell. The first SRS and the second SRS need to be sent in the secondary cell.

It should be further understood that the first uplink signal and the second uplink signal may further include another uplink signal, for example, an uplink demodulation reference signal. This is not limited in this embodiment of the present invention.

An embodiment of the present invention further provides another method 200 for activating a secondary cell. The method 200 may be applied to the scenario shown in FIG. 3, and certainly, may also be applied to another communication scenario. This is not limited in this embodiment of the present invention.

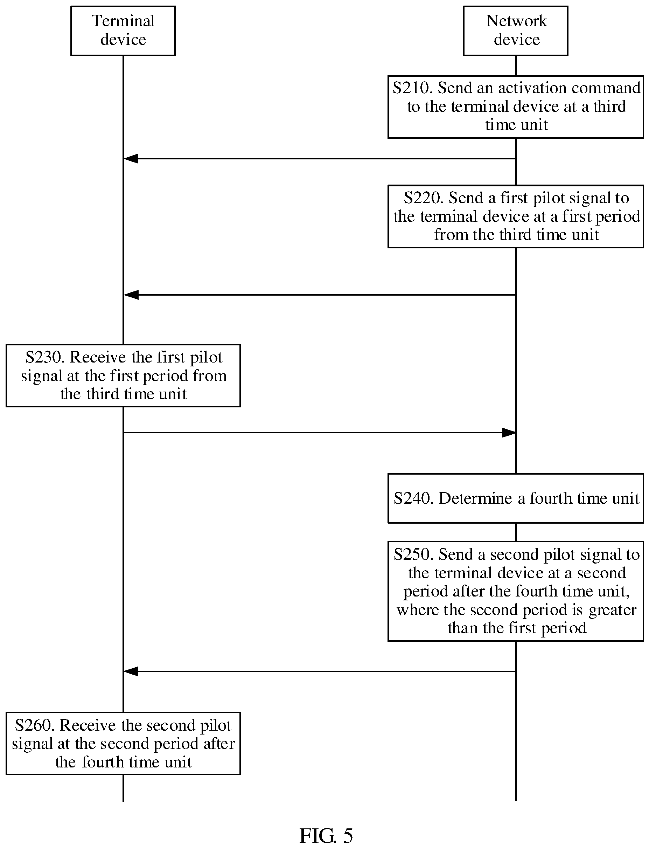

As shown in FIG. 5, the method 200 includes the following steps:
S210. A network device sends an activation command for a secondary cell to a terminal device at a third time unit, and correspondingly, the terminal device receives the activation command for the secondary cell at the third time unit.
S220. The network device sends a first pilot signal to the terminal device using a first period from the third time unit.
S230. The terminal device receives the first pilot signal sent by the network device, at the first period from the third time unit.
S240. The network device determines a fourth time unit, where the fourth time unit is a time unit at which a maximum activation time expires or a time unit at which the network device sends a scheduling command to the terminal device.
S250. The network device sends a second pilot signal to the terminal device using a second period after the fourth time unit, where the second period is greater than the first period.
S260. The terminal device receives the second pilot signal sent by the network device, at the second period after the fourth time unit.

According to the method for activating a secondary cell provided in this embodiment of the present invention, in a secondary cell activation process, that is, in a time period in which the terminal device receives the activation command and the scheduling command, the network device sends the first pilot signal to the terminal device at the relatively short first period, and a probability that the terminal device receives the first pilot signal used for downlink synchronization is increased, so that the terminal device can complete downlink synchronization earlier, and complete hardware preparation work, that is, complete activation of the secondary cell, earlier. In this way, the terminal device is capable of sending, to the network device earlier, an uplink signal used to notify that the secondary cell has been successfully activated, and the network device is capable of sending the scheduling command earlier based on the uplink signal. The scheduling command is used to schedule the terminal device to receive or send data. This can reduce time used by the network device to learn that the secondary cell has been successfully activated, and reduce an activation delay. After sending the scheduling command, the network device sends the second pilot signal at the relatively long second period, so that network resources consumed for sending the second pilot signal are reduced, thereby resolving a problem that consumption of the network resources and the activation delay are unbalanced in a secondary cell activation process or after the secondary cell is activated, and improving data transmission efficiency and user experience.

Specifically, in S210, the network device sends the activation command for the secondary cell to the terminal device at the third time unit, to notify the terminal device of starting to activate the secondary cell. Correspondingly, the terminal device receives the activation command for the secondary cell at the third time unit. It should be understood that, in this application, the time unit and the moment may express a same meaning, and may be replaced with each other. For example, the third time unit may be a third moment, and the third time unit may be in a subframe, a slot, a mini-slot, or an sTTI. This is not limited in this embodiment of the present invention.

It should be further understood that, the activation command for the secondary cell may be sent in an MAC CE, or may be sent on a PDCCH. This is not limited in this embodiment of the present invention.

It should be further understood that, secondary cell adding or modification signaling in the activation command for the secondary cell may be sent in a form of an index of a secondary cell group, or may be sent in a form of an index of a single secondary cell. This is not limited in this embodiment of the present invention.

In S220, the network device sends the first pilot signal to the terminal device at the first period from the third time unit, and the first pilot signal is used by the terminal device to complete downlink synchronization and valid channel state information measurement based on the first pilot signal, and finally complete hardware preparation work such as phase-locked loop adjustment, crystal oscillator adjustment, automatic gain control, and radio frequency chain activation. After completing the hardware preparation work, the terminal device sends, to the network device, an uplink signal which may be, for example, CSI and/or an SRS, to notify the terminal device that the hardware preparation work is completed. After receiving the uplink signal, the network device sends the scheduling command to the terminal device, to schedule the terminal device to receive or send data. Correspondingly, in S230, the terminal device receives the first pilot signal sent by the network device, at the first period from the third time unit.

In S240, the network device determines the fourth time unit, where the fourth time unit is a time unit at which the maximum activation time expires or a time unit at which the network device sends the scheduling command to the terminal device.

After successfully receiving the uplink signal, the network device sends the scheduling command to the terminal device, to schedule the terminal device to receive or send data. The fourth time unit may be a time unit at which the network device sends the scheduling command to the terminal device. Alternatively, the fourth time unit may also be a time unit at which the network device correctly receives the uplink signal. Alternatively, maximum activation duration is configured in configuration information of a system, and the maximum activation time is specified or predefined in a protocol and is a maximum time from a time point at which the terminal device receives the activation command to a time point at which the terminal device activates the secondary cell, for example, n+24 milliseconds or n+34 milliseconds as defined in 3GPP 36.133. A latest time for activating the secondary cell can be no later than (no later than) the time unit at which the maximum activation time expires. When the time unit of the maximum activation time (the latest activation time) expires, the network device sends the scheduling command to the terminal device regardless of whether the network device correctly receives the first uplink signal. Therefore, the fourth time unit may be the time unit at which the maximum activation time expires. For example, a value of the maximum activation duration may be 24 ms or 34 ms, may be 24 sTTIs or 34 sTTIs, may be 24 slots or 34 slots, or the like. This is not limited in this embodiment of the present invention.

In S250, the network device sends the second pilot signal to the terminal device at the second period after the fourth time unit, where the second period is greater than the first period.

Specifically, after the fourth time unit, the second pilot signal does not need to be frequently sent to the terminal device as what has been done when the scheduling command is sent previously. Therefore, the network device sends the second pilot signal to the terminal device at the second period, and the second period is greater than the first period. The second pilot signal is used for subsequent coherent demodulation and detection, channel quality measurement, and the like performed between the network device and the terminal device, to facilitate subsequent data transmission. Correspondingly, in S260, the terminal device receives the second pilot signal sent by the network device, at the second period after the fourth time unit.

It should be understood that, after the fourth time unit, the network device may alternatively send the second pilot signal to the terminal device in another manner in which consumption of the network resources can be reduced, for example, an aperiodic manner. This is not limited in this embodiment of the present invention.

It should be further understood that the first period may be a period specified in a system, and may be, for example, 1 ms, or may be another value. Optionally, a shorter first period indicates a shorter activation time. For example, the first period may be 1 ms, one slot, one sTTI, or the like. The second period is greater than the first period. Optionally, a longer second period indicates less consumption of the network resources.

It should be further understood that after sending the first pilot signal to the terminal device, the network device periodically receives the uplink signal sent by the terminal device. It can be understood that, if the network device receives the uplink signal earlier, the network device also learns earlier that activation of the secondary cell has been completed. That is, the network device sends the first pilot signal at the relatively short first period, and the terminal device completes the downlink synchronization and the hardware preparation work earlier based on the first pilot signal, that is, completes the activation of the secondary cell earlier. Then, the terminal device sends the uplink signal to the network device at a relatively short period. Time used to notify the network device that the secondary cell has been activated can be reduced. An activation delay can be shortened more effectively. After the secondary cell has been activated, the network device sends the second pilot signal at the relatively long second period, and the terminal device sends the second uplink signal at the relatively long second period or based on the scheduling, so that the network resources can be more effectively saved.

According to the method for activating a secondary cell provided in this embodiment of the present invention, in an activation process, the network device sends the first pilot signal to the terminal device at the relatively short first period, so that the terminal device can complete the activation of the secondary cell earlier. In this way, the terminal device is capable of sending, to the network device earlier, the uplink signal that is used to notify that the activation of the secondary cell has been completed. Therefore, the network device is capable of sending the scheduling command earlier based on the uplink signal, thereby reducing the activation delay. After the activation is completed, the network device sends the second pilot signal at the relatively long second period, and the network resources consumed for sending the second pilot signal are reduced, thereby resolving a problem that the consumption of the network resources and the activation delay are unbalanced in the secondary cell activation process or after the secondary cell is activated, and improving data transmission efficiency and user experience.

Optionally, in an embodiment, before S210, the method further includes the following steps.

S209. The network device sends a configuration message of the secondary cell, where the configuration message includes configuration information of the first period and configuration information of the second period.

Specifically, before the network device sends the activation command to the terminal device, the network device sends the configuration message of the secondary cell to the terminal device. The configuration message of the secondary cell may be an RRC reconfiguration message. The configuration message includes the secondary cell addition or modification signaling. For example, the terminal device adds, based on the secondary cell adding signaling, a carrier in the configuration message as a carrier on which the secondary cell is located, and then the secondary cell will be in an inactive state. The configuration message further includes the configuration information of the first period and the configuration information of the second period. The network device sends the first pilot signal and the second pilot signal according to a protocol specification, and based on the configuration message or other instruction information used to instruct the network device to send the first pilot signal and the second pilot signal at the first period and the second period. For example, the indication information may be used to instruct the network device to send the first uplink signal and the second pilot signal in different manners in different time segments. The network device sends the first pilot signal and the second pilot signal at different periods in different time segments according to the information. The terminal also receives the first pilot signal and the second pilot signal at different periods in different time segments based on the reconfiguration information and the instruction information.

It should be understood that information such as the first period and the second period may be notified to the terminal device by using the configuration message, or may be negotiated by the network device and the terminal device in advance, in other words, preconfigured by the system. This is not limited in this embodiment of the present invention.

It should be further understood that the configuration message may further include instruction information used to indicate whether the network device needs to send the first pilot signal at different periods in different time segments. For example, the instruction information may instruct the network device to send the first pilot signal and the second pilot signal always at a same period, or may send the first uplink signal and the second pilot signal in different time segments at different periods that are included in the configuration message. That is, the network device may determine, based on the instruction information, whether the first pilot signal needs to be sent at the first period in the secondary cell activation process, and whether the second pilot signal needs to be sent at the second period after the secondary cell has been activated. This is not limited in this embodiment of the present invention.

It should be further understood that information such as the first period and the second period may be further indicated to another terminal device by using a broadcast message or RRC dedicated signaling, and the another terminal device may receive data based on period information of the first pilot signal, and/or complete a downlink synchronization process earlier. This is not limited in this embodiment of the present invention.

Optionally, in an embodiment, the first pilot signal includes a first demodulation reference signal DMRS and/or a first beam pilot signal, and the second pilot signal includes a second DMRS and/or a second beam pilot signal.

Specifically, after the network device sends the activation command to the terminal device, the first pilot signal sent to the terminal device includes the first demodulation reference signal (demodulation reference signal, DMRS) and/or the first beam pilot signal. The first DMRS and/or the first beam pilot signal is used by the terminal device for related detection and data demodulation. The terminal device completes downlink synchronization and valid channel state information measurement and completes hardware preparation work based on the first DMRS and/or the first beam pilot signal. After the hardware preparation work is completed, the uplink signal is sent to the network device.

After the secondary cell is activated, the second DMRS and/or the second beam pilot signal is used for subsequent coherent demodulation and detection, channel quality measurement, and the like performed between the network device and the terminal device, to facilitate effective data transmission between the network device and the terminal device.

It should be understood that the second beam pilot signal and the first beam pilot signal may be the same, or may be different. The second DMRS and the first DMRS may be the same, or may be different. This is not limited in this embodiment of the present invention.

It should be further understood that the first pilot signal and the second pilot signal may further include another downlink signal, for example, a beam reference signal, a cell-specific reference signal (cell-specific reference signals, CRS), a primary synchronization signal (primary synchronization signal, SSS), a secondary synchronization signal (secondary synchronization signal, PSS), a synchronization signal (synchronization signal, SS) block, a demodulation reference signal, a location reference signal, and a channel state information reference signal. This is not limited in this embodiment of the present invention.

An embodiment of the present invention further provides a method 300 for activating a secondary cell. The method 300 may be applied to the scenario shown in FIG. 3, and certainly, may also be applied to another communication scenario. This is not limited in this embodiment of the present invention.

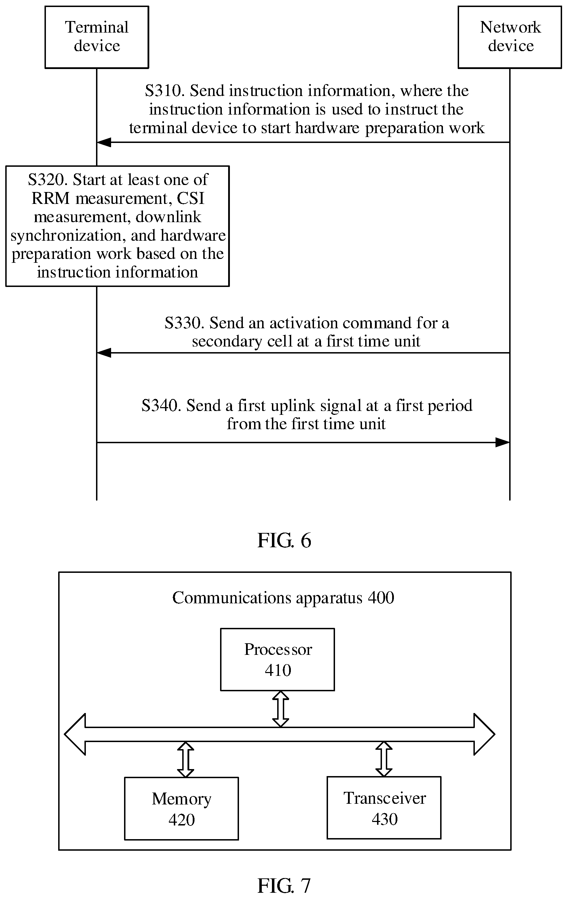

As shown in FIG. 6, the method 300 includes the following steps:
S310. A network device sends instruction information to a terminal device, where the instruction information is used to instruct the terminal device to start hardware preparation work.
S320. The terminal device receives the instruction information, and starts at least one of radio resource management RRM measurement, CSI measurement, downlink synchronization, and the hardware preparation work based on the instruction information.
S330. After the network device sends the instruction information, the network device sends an activation command for a secondary cell to the terminal device at a first time unit.
S340. The terminal device receives the activation command for the secondary cell at the first time unit, and sends a first uplink signal to the network device using a first period from the first time unit. Correspondingly, the network device receives, at the first period, the first uplink signal sent by the terminal device.

According to the method for activating a secondary cell provided in this embodiment of the present invention, the terminal device does not need to wait to start the hardware preparation work until receiving the activation command for the secondary cell that is sent by the network device, and instead, starts the hardware preparation work before receiving the activation command for the secondary cell and after receiving the instruction information sent by the network device. The instruction information may alternatively be an activation command. In this way, the hardware preparation work can be completed earlier. After receiving the activation command for the secondary cell, the terminal device sends the first uplink signal to the network device at the first period, so that the network device can learn earlier that the secondary cell has been successfully activated, time used by the network device to learn that the secondary cell has been successfully activated is shortened, an activation delay is reduced, and the network device can schedule the secondary cell earlier.

Optionally, in an embodiment, the method 300 further includes the following steps.

S350. The terminal device determines a second time unit, where the second time unit is a time unit at which a maximum activation time expires or a time unit at which a scheduling command sent by the network device is received.

S360. The terminal device sends a second uplink signal to the network device using a second period or based on scheduling of the network device after the second time unit, where the second period is greater than the first period. Correspondingly, the network device receives, at the second period, the second uplink signal sent by the terminal device, or receives, based on scheduling of the network device, the second uplink signal sent by the terminal device.

According to the method for activating a secondary cell provided in this embodiment of the present invention, since the terminal device receives the activation command for the secondary cell, the terminal device sends the first uplink signal to the network device at the relatively short first period, so that the network device can learn earlier that the secondary cell has been successfully activated, the time used by the network device to learn that the secondary cell has been successfully activated is shortened, and the activation delay is reduced. After receiving the scheduling command or the maximum activation time expires, the terminal device sends the second uplink signal at the relatively long second period or based on the scheduling of the network device, and network resources consumed for sending the second uplink signal are reduced, thereby resolving a problem that consumption of the network resources and the activation delay are unbalanced in the secondary cell activation process or after the secondary cell is activated, and improving data transmission efficiency and user experience.

Optionally, in an embodiment, after receiving the instruction information, the terminal device performs at least one of radio resource management (radio resource management, RRM) measurement, CSI measurement, downlink synchronization, and hardware preparation work, and the hardware preparation work includes at least one of phase-locked loop adjustment, crystal oscillator adjustment, automatic gain control, and radio frequency chain activation. This is not limited in this embodiment of the present invention.

Optionally, in an embodiment, the instruction information and the activation command for the secondary cell may be sent in a form of an MAC CE, or sent in a form of physical layer signaling. This is not limited in this embodiment of the present invention.

Optionally, in an embodiment, before the terminal device receives the instruction information, the method further includes: receiving, by the terminal device, configuration message of the secondary cell that is sent by the network device, where the configuration message of the secondary cell includes at least one of: period information of the RRM measurement, a period of the CSI measurement, a configuration of the first period, and configuration information of the second period.

Optionally, in an embodiment, the first uplink signal includes first channel state information CSI and/or a first sounding reference signal SRS, and the second uplink signal includes second CSI and/or a second SRS.

It should be understood that the various embodiments described above are similar to the corresponding steps in the method 100 and the method 200. For brevity, details are not described herein again.

It should be further understood that sequence numbers of the processes and the steps do not mean execution sequences in the various embodiments of the present invention. The execution sequences of the processes should depend on functions and internal logic of the processes, and should not be construed as any limitation on the implementation processes of the embodiments of the present invention.

With reference to FIG. 1 to FIG. 6, the foregoing describes in detail the method for activating a secondary cell according to the embodiments of the present invention. With reference to FIG. 7 to FIG. 18, the following describes in detail a communications apparatus and a network device according to the embodiments of the present invention.

FIG. 7 is a schematic block diagram of a communications apparatus 400 according to an embodiment of the present invention. It should be understood that the communications apparatus may be the foregoing terminal device, and the communications apparatus embodiment and the method embodiment are corresponding to each other. For similar descriptions, refer to the method embodiment. The communications apparatus 400 shown in FIG. 7 may be configured to perform the corresponding steps performed by the terminal device in FIG. 4. The communications apparatus 400 includes: a processor 410, a memory 420, and a transceiver 430. The processor 410, the memory 420, and the transceiver 430 are connected through communication. The memory 420 stores an instruction. The processor 410 is configured to execute the instruction stored in the memory 420. The transceiver 430, driven by the processor 410, is configured to send or receive a specific signal.

The transceiver 430 is configured to: after receiving an activation command for a secondary cell that is sent by a network device, send a first uplink signal to the network device using a first period from a first time unit.

The processor 410 is configured to determine a second time unit, where the second time unit is a time unit at which a maximum activation time expires or a time unit at which a scheduling command sent by the network device is received.

The transceiver 430 is further configured to send a second uplink signal to the network device using a second period or based on scheduling of the network device after the second time unit, where the second period is greater than the first period.

According to the communications apparatus provided in this embodiment of the present invention, in a secondary cell activation process, that is, in a time period from the first time unit at which the communications apparatus receives the activation command to the time unit at which the communications apparatus receives a scheduling command or the maximum activation time expires, the first uplink signal is sent to the network device at the relatively short first period, and a probability that the network device receives the first uplink signal used to notify that the secondary cell has been activated is increased, so that the network device can receive the first uplink signal earlier, and send the scheduling command to the communications apparatus earlier based on the first uplink signal. This shortens time used by the network device to learn that the secondary cell has been successfully activated, and reduces an activation delay. After receiving the scheduling command, the communications apparatus sends the second uplink signal at the relatively long second period or based on scheduling of the network device, so that network resources consumed for sending the second uplink signal are reduced, thereby resolving a problem that consumption of network resources and an activation delay are unbalanced in the secondary cell activation process or after the secondary cell is activated, and improving data transmission efficiency and user experience.

Components in the communications apparatus 400 are connected through communication, that is, the processor 410, the memory 420, and the transceiver 430 communicate with each other by using an internal connection path, to transfer a control and/or data signal. The foregoing method embodiments of this application may be applied to the processor, or the processor implements the steps of the foregoing method embodiments. The processor may be an integrated circuit chip and has a signal processing capability. In an implementation process, steps in the foregoing method embodiments can be completed by using a hardware-integrated logic circuit in the processor, or by using instructions in a form of software. The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The methods, the steps, and the logical block diagrams that are disclosed in this application may be implemented or performed. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

Optionally, in another embodiment of the present invention, before receiving the activation command for the secondary cell, the transceiver 430 is further configured to receive a configuration message of the secondary cell that is sent by the network device, where the communications apparatus receives the configuration message of the secondary cell that is sent by the network device, and the configuration message includes at least one of configuration information of the second period and configuration information of the scheduling of the network device, and configuration information of the first period.

Optionally, in another embodiment of the present invention, the first uplink signal sent by the transceiver 430 includes first channel state information CSI and/or a first sounding reference signal SRS, and the second uplink signal sent by the transceiver 430 includes second CSI and/or a second SRS.

Optionally, in another embodiment of the present invention, the first time unit is a time unit at which the communications apparatus is capable of sending the first uplink signal to the network device.

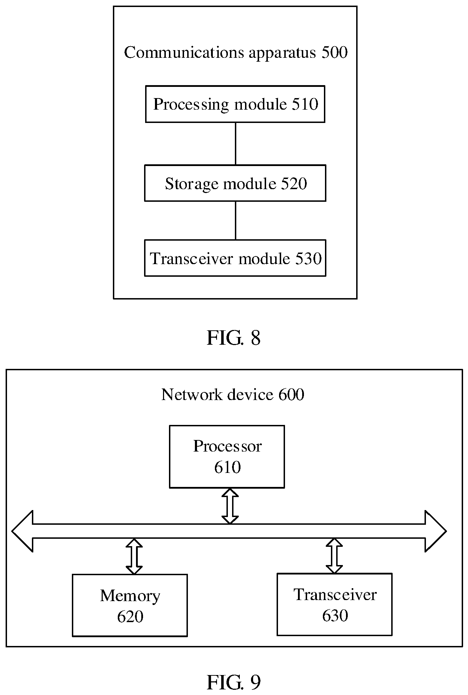

It should be noted that, in this embodiment of the present invention, the processor 410 may be implemented by a processing module, the memory 420 may be implemented by a storage module, and the transceiver 430 may be implemented by a transceiver module. As shown in FIG. 8, a communications apparatus 500 may include a processing module 510, a storage module 520, and a transceiver module 530.

The communications apparatus 400 shown in FIG. 7 or the communications apparatus 500 shown in FIG. 8 can implement the steps performed by the terminal device in FIG. 4. To avoid repetition, details are not described herein again.

FIG. 9 is a schematic block diagram of a network device 600 according to an embodiment of the present invention. It should be understood that the network device embodiment and the method embodiment are corresponding to each other. For similar descriptions, refer to the method embodiment. As shown in FIG. 9, the network device 600 includes: a processor 610, a memory 620, and a transceiver 630. The processor 610, the memory 620, and the transceiver 630 are connected through communication. The memory 620 stores an instruction. The processor 610 is configured to execute the instruction stored in the memory 620. The transceiver 630, driven by the processor 610, is configured to send or receive a specific signal.

The transceiver 630 is configured to: after sending an activation command for a secondary cell to a terminal device, receive, by the network device, a first uplink signal sent by the terminal device, using a first period from a first time unit.

The processor 610 is configured to determine a second time unit, where the second time unit is a time unit at which a maximum activation time expires or a time unit at which a scheduling command is sent to the terminal device.

The transceiver 630 is further configured to receive a second uplink signal sent by the terminal device, using a second period or based on scheduling of the network device after the second time unit, where the second period is greater than the first period.

According to the network device provided in this embodiment of the present invention, in a secondary cell activation process, that is, in a time period from the first time unit at which the activation command is sent to the time unit at which the scheduling command is sent or the maximum activation time expires, the first uplink signal is received at the relatively short first period, and a probability that the network device receives the first uplink signal used to notify that the secondary cell has been activated is increased, so that the network device can receive the first uplink signal earlier, and send the scheduling command to the terminal device earlier based on the first uplink signal. This shortens time used by the network device to learn that the secondary cell has been successfully activated, and reduces an activation delay. After sending the scheduling command, the network device receives the second uplink signal at the relatively long second period or based on the scheduling of the network device, and network resources consumed for the second uplink signal are reduced, thereby resolving a problem that consumption of network resources and an activation delay are unbalanced in the secondary cell activation process or after the secondary cell is activated, and improving data transmission efficiency and user experience.

Components in the network device 600 are connected through communication, that is, the processor 610, the memory 620, and the transceiver 630 communicate with each other by using an internal connection path, to transfer a control and/or data signal. The foregoing method embodiments of this application may be applied to the processor, or the processor implements the steps of the foregoing method embodiments. The processor may be an integrated circuit chip and has a signal processing capability. In an implementation process, steps in the foregoing method embodiments can be completed by using a hardware-integrated logic circuit in the processor, or by using instructions in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and the logical block diagrams that are disclosed in this application may be implemented or performed. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

Optionally, in another embodiment of the present invention, before sending the activation command for the secondary cell, the transceiver 630 is further configured to send a configuration message of the secondary cell to the terminal device, and the terminal device receives the configuration message of the secondary cell that is sent by the network device, where the configuration message includes at least one of configuration information of the second period and configuration information of the scheduling of the network device, and configuration information of the first period.

Optionally, in another embodiment of the present invention, the first uplink signal received by the transceiver 630 includes first channel state information CSI and/or a first sounding reference signal SRS, and the second uplink signal received by the transceiver includes second CSI and/or a second SRS.

Optionally, in another embodiment of the present invention, the first time unit is a time unit at which the terminal device is capable of sending the first uplink signal to the network device.

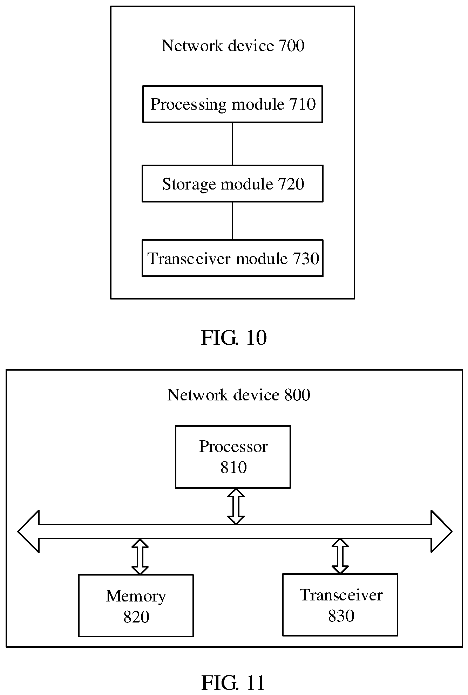

It should be noted that, in this embodiment of the present invention, the processor 610 may be implemented by a processing module, the memory 620 may be implemented by a storage module, and the transceiver 630 may be implemented by a transceiver module. As shown in FIG. 10, a network device 700 may include a processing module 710, a storage module 720, and a transceiver module 730.

The network device 600 shown in FIG. 9 or the network device 700 shown in FIG. 10 can implement the steps performed by the network device in FIG. 4. To avoid repetition, details are not described herein again.

FIG. 11 is a schematic block diagram of a network device according to an embodiment of the present invention. It should be understood that the network device embodiment and the method embodiment are corresponding to each other. For similar descriptions, refer to the method embodiment. The network device 800 shown in FIG. 11 may be configured to perform the corresponding steps performed by the network device in FIG. 5. The network device 800 includes: a processor 810, a memory 820, and a transceiver 830. The processor 810, the memory 820, and the transceiver 830 are connected through communication. The memory 820 stores an instruction. The processor 810 is configured to execute the instruction stored in the memory 820. The transceiver 830, driven by the processor 810, is configured to send or receive a specific signal.

The transceiver 830 is configured to send an activation command for a secondary cell to a terminal device at a third time unit.

The transceiver 830 is further configured to send a first pilot signal to the terminal device using a first period from the third time unit.

The processor 810 is configured to determine a fourth time unit, where the fourth time unit is a time unit at which a maximum activation time expires or a time unit at which the network device sends a scheduling command to the terminal device.

The transceiver 830 is further configured to send a second pilot signal to the terminal device using a second period after the fourth time unit, where the second period is greater than the first period.

According to the network device provided in this embodiment of the present invention, in a secondary cell activation process, that is, in a time period in which the network device sends the activation command and sends the scheduling command, the network device sends the first pilot signal to the terminal device at the relatively short first period, and a probability that the terminal device receives the first pilot signal used for downlink synchronization is increased, so that the terminal device can complete downlink synchronization earlier, and complete hardware preparation work, that is, complete activation of the secondary cell, earlier. In this way, the terminal device is capable of sending, to the network device earlier, an uplink signal used to notify that the secondary cell has been successfully activated, and the network device is capable of sending the scheduling command earlier based on the uplink signal. This can reduce time used by the network device to learn that the secondary cell has been successfully activated, and reduce an activation delay. After sending the scheduling command, the network device sends the second pilot signal at the relatively long second period, so that network resources consumed for sending the second pilot signal are reduced, thereby resolving a problem that consumption of the network resources and the activation delay are unbalanced in a secondary cell activation process or after the secondary cell is activated, and improving data transmission efficiency and user experience.

Components in the network device 800 are connected through communication, that is, the processor 810, the memory 820, and the transceiver 830 communicate with each other by using an internal connection path, to transfer a control and/or data signal. The foregoing method embodiments of this application may be applied to the processor, or the processor implements the steps of the foregoing method embodiments. The processor may be an integrated circuit chip and has a signal processing capability. In an implementation process, steps in the foregoing method embodiments can be completed by using a hardware-integrated logic circuit in the processor, or by using instructions in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and the logical block diagrams that are disclosed in this application may be implemented or performed. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

Optionally, in another embodiment of the present invention, before sending the activation command for the secondary cell, the transceiver 830 is further configured to send a configuration message of the secondary cell to the terminal device, where the configuration message includes configuration information of the first period and configuration information of the second period.

Optionally, in another embodiment of the present invention, the first pilot signal sent by the transceiver 830 includes a first cell-specific reference signal CRS and/or a first demodulation reference signal DMRS, and the second pilot signal sent by the transceiver 830 includes a second CRS and/or a second DMRS.

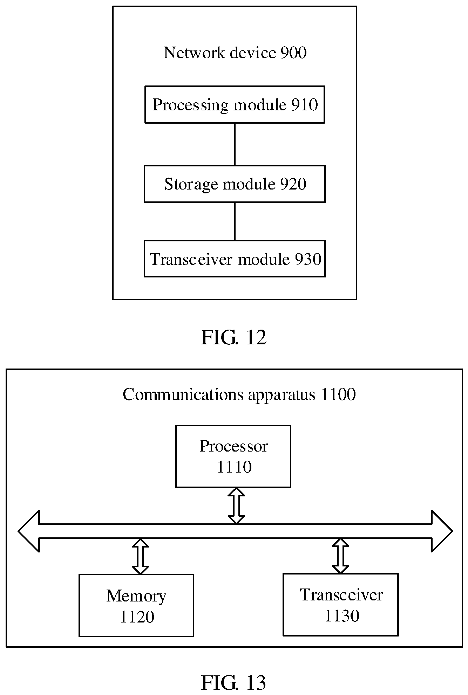

It should be noted that, in this embodiment of the present invention, the processor 810 may be implemented by a processing module, the memory 820 may be implemented by a storage module, and the transceiver 830 may be implemented by a transceiver module. As shown in FIG. 12, a network device 900 may include a processing module 910, a storage module 920, and a transceiver module 930.

The network device 800 shown in FIG. 11 or the network device 900 shown in FIG. 12 can implement the steps performed by the network device in FIG. 5. To avoid repetition, details are not described herein again.

FIG. 13 is a schematic block diagram of a communications apparatus 1100 according to an embodiment of the present invention. It should be understood that the communications apparatus may be the foregoing terminal device, and the communications apparatus embodiment and the method embodiment are corresponding to each other. For similar descriptions, refer to the method embodiment. As shown in FIG. 13, the communications apparatus 1100 includes a processor 1110, a memory 1120, and a transceiver 1130. The processor 1110, the memory 1120, and the transceiver 1130 are connected through communication. The memory 1120 stores an instruction. The processor 1110 is configured to execute the instruction stored in the memory 1120. The transceiver 1130, driven by the processor 1110, is configured to send or receive a specific signal.

The transceiver 1130 is configured to receive, at a third time unit, an activation command for a secondary cell that is sent by a network device.

The transceiver 1130 is further configured to receive a first pilot signal sent by the network device, using a first period from the third time unit.

The processor 1110 is configured to determine a fourth time unit, where the fourth time unit is a time unit at which a maximum activation time expires or a time unit at which the communications apparatus receives a scheduling command sent by the network device.

The transceiver 1130 is further configured to receive a second pilot signal sent by the network device, using a second period after the fourth time unit, where the second period is greater than the first period.

According to the communications apparatus provided in this embodiment of the present invention, in a secondary cell activation process, that is, in a time period in which the communications apparatus receives the activation command and the scheduling command, the communications apparatus receives the first pilot signal at the relatively short first period, and a probability that the communications apparatus receives the first pilot signal used for downlink synchronization is increased, so that the communications apparatus can complete the downlink synchronization earlier and complete hardware preparation work, that is, complete activation of the secondary cell, earlier. In this way, the communications apparatus is capable of sending, to the network device earlier, an uplink signal used to notify that the secondary cell has been successfully activated, time used by the network device to learn that the secondary cell has been successfully activated can be reduced, and an activation delay can be reduced. After receiving the scheduling command, the communications apparatus receives the second pilot signal at the relatively long second period, so that network resources consumed by the second pilot signal are reduced, thereby resolving a problem that consumption of the network resources and the activation delay are unbalanced in a secondary cell activation process or after the secondary cell is activated, and improving data transmission efficiency and user experience.

Components in the communications apparatus 1100 are connected through communication, that is, the processor 1110, the memory 1120, and the transceiver 1130 communicate with each other by using an internal connection path, to transfer a control and/or data signal. The foregoing method embodiments of this application may be applied to the processor, or the processor implements the steps of the foregoing method embodiments. The processor may be an integrated circuit chip and has a signal processing capability. In an implementation process, steps in the foregoing method embodiments can be completed by using a hardware-integrated logic circuit in the processor, or by using instructions in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and the logical block diagrams that are disclosed in this application may be implemented or performed. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

Optionally, in another embodiment of the present invention, before receiving the activation command for the secondary cell, the transceiver 1130 is further configured to receive a configuration message of the secondary cell that is sent by the network device, where the configuration message includes configuration information of the first period and configuration information of the second period.

Optionally, in another embodiment of the present invention, the first pilot signal received by the transceiver 1130 includes a first demodulation reference signal DMRS and/or a first beam pilot signal, and the second pilot signal received by the transceiver 1130 includes a second DMRS and/or a second beam pilot signal.

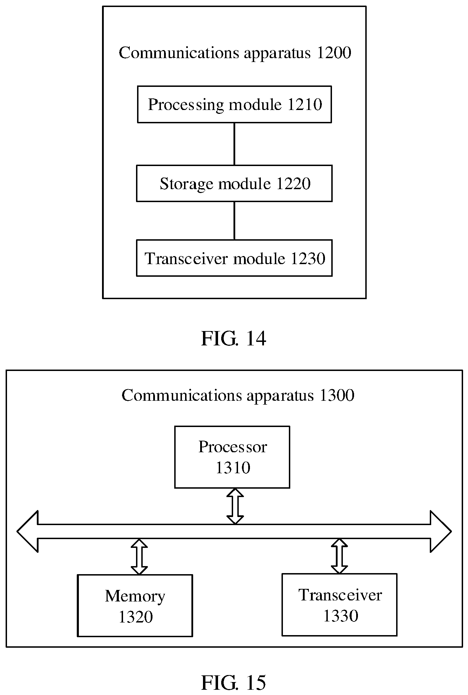

It should be noted that, in this embodiment of the present invention, the processor 1100 may be implemented by a processing module, the memory 1120 may be implemented by a storage module, and the transceiver 1130 may be implemented by a transceiver module. As shown in FIG. 14, a communications apparatus 1200 may include a processing module 1210, a storage module 1220, and a transceiver module 1230.

The communications apparatus 1100 shown in FIG. 13 or the communications apparatus 1200 shown in FIG. 14 can implement the steps performed by the terminal device in FIG. 5. To avoid repetition, details are not described herein again.

FIG. 15 is a schematic block diagram of a communications apparatus 1300 according to an embodiment of the present invention. It should be understood that the communications apparatus may be the foregoing terminal device, and the communications apparatus embodiment and the method embodiment are corresponding to each other. For similar descriptions, refer to the method embodiment. As shown in FIG. 15, the communications apparatus 1300 includes a processor 1310, a memory 1320, and a transceiver 1330. The processor 1310, the memory 1320, and the transceiver 1330 are connected through communication. The memory 1320 stores an instruction. The processor 1310 is configured to execute the instruction stored in the memory 1320. The transceiver 1330, driven by the processor 1310, is configured to send or receive a specific signal.

The transceiver 1330 is configured to receive instruction information sent by a network device, where the instruction information is used to instruct the communications apparatus to start hardware preparation work.

The processor 1310 is configured to start at least one of RRM measurement, CSI measurement, downlink synchronization, and the hardware preparation work based on the instruction information.

The transceiver 1330 is further configured to: after receiving the instruction information, receive, at the first time unit, an activation command for a secondary cell that is sent by the network device.

The transceiver 1330 is further configured to send a first pilot signal to the network device using a first period from the first time unit.

According to the communications apparatus provided in this embodiment of the present invention, the communications apparatus does not need to wait to start the hardware preparation work until receiving the activation command for the secondary cell that is sent by the network device, and instead, starts the hardware preparation work before receiving the activation command for the secondary cell and after receiving the instruction information sent by the network device. The instruction information may alternatively be an activation command. In this way, the communications apparatus can complete the hardware preparation work earlier. After receiving the activation command for the secondary cell, the communications apparatus sends the first uplink signal to the network device at the first period, so that the network device can learn earlier that the secondary cell has been successfully activated, time used by the network device to learn that the secondary cell has been successfully activated is reduced, an activation delay is reduced, and the network device can schedule the secondary cell earlier

Components in the communications apparatus 1300 are connected through communication, that is, the processor 1310, the memory 1320, and the transceiver 1330 communicate with each other by using an internal connection path, to transfer a control and/or data signal. The foregoing method embodiments of this application may be applied to the processor, or the processor implements the steps of the foregoing method embodiments. The processor may be an integrated circuit chip and has a signal processing capability. In an implementation process, steps in the foregoing method embodiments can be completed by using a hardware-integrated logic circuit in the processor, or by using instructions in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and the logical block diagrams that are disclosed in this application may be implemented or performed. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

Optionally, in another embodiment of the present invention, the processor 1310 is further configured to determine a second time unit, where the second time unit is a time unit at which a maximum activation time expires or a time unit at which a scheduling command sent by the network device is received. The transceiver 1330 is further configured to send a second uplink signal to the network device using a second period or based on scheduling of the network device after the second time unit, where the second period is greater than the first period.

Optionally, in another embodiment of the present invention, the processor 1310 is specifically configured to: after receiving the instruction information, start at least one of the RRM measurement, the CSI measurement, the downlink synchronization, and the hardware preparation work, and the hardware preparation work includes at least one of phase-locked loop adjustment, crystal oscillator adjustment, automatic gain control, and radio frequency chain activation.

Optionally, in another embodiment of the present invention, the instruction information and the activation command for the secondary cell may be sent in a form of an MAC CE, or sent in a form of physical layer signaling.

Optionally, in another embodiment of the present invention, before receiving the instruction information, the transceiver 1330 is further configured to receive configuration message of the secondary cell that is sent by the network device, where the configuration message of the secondary cell includes at least one of: period information of the RRM measurement, a period of the CSI measurement, a configuration of the first period, and configuration information of the second period.

Optionally, in another embodiment of the present invention, the first uplink signal includes first channel state information CSI and/or a first sounding reference signal SRS, and the second uplink signal includes second CSI and/or a second SRS.

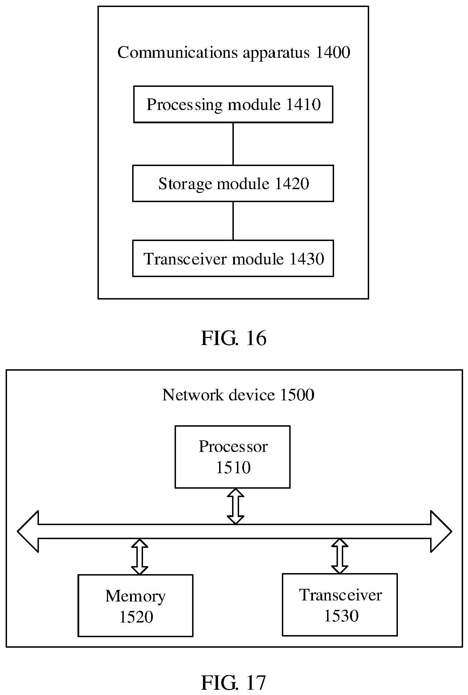

It should be noted that, in this embodiment of the present invention, the processor 1300 may be implemented by a processing module, the memory 1320 may be implemented by a storage module, and the transceiver 1330 may be implemented by a transceiver module. As shown in FIG. 16, a communications apparatus 1400 may include a processing module 1410, a storage module 1420, and a transceiver module 1430.

The communications apparatus 1300 shown in FIG. 15 or the communications apparatus 1400 shown in FIG. 16 can implement the steps performed by the terminal device in FIG. 6. To avoid repetition, details are not described herein again.

FIG. 17 is a schematic block diagram of a network device according to an embodiment of the present invention. It should be understood that the network device embodiment and the method embodiment are corresponding to each other. For similar descriptions, refer to the method embodiment. The network device 1500 shown in FIG. 17 may be configured to perform the corresponding steps performed by the network device in FIG. 6. The network device 1500 includes: a processor 1510, a memory 1520, and a transceiver 1530. The processor 1510, the memory 1520, and the transceiver 1530 are connected through communication. The memory 1520 stores an instruction. The processor 1510 is configured to execute the instruction stored in the memory 1520. The transceiver 1530, driven by the processor 1510, is configured to send or receive a specific signal.

The transceiver 1530 is configured to send instruction information to a terminal device, where the instruction information is used to instruct the terminal device to start hardware preparation work.

The transceiver 1530 is further configured to: after sending the instruction information, send an activation command for a secondary cell to the terminal device at a first time unit.

The transceiver 1530 is further configured to receive a first pilot signal sent by the terminal device, using a first period from the first time unit.

According to the network device provided in this embodiment of the present invention, before sending the activation command for the secondary cell to the terminal device, the network device sends the instruction information to the terminal device, where the instruction information is used by the terminal device to start the hardware preparation work. The terminal device does not need to wait to start the hardware preparation work until receiving the activation command for the secondary cell that is sent by the network device, and instead, starts the hardware preparation work before receiving the activation command for the secondary cell. The instruction information may alternatively be an activation command. In this way, the terminal device can complete the hardware preparation work earlier. After the network device sends the activation command for the secondary cell, the terminal device sends the first uplink signal to the network device at the first period, so that the network device can learn earlier that the secondary cell has been successfully activated, time used by the network device to learn that the secondary cell has been successfully activated is shortened, an activation delay is reduced, and the network device can schedule the secondary cell earlier.

Components in the network device 1500 are connected through communication, that is, the processor 1510, the memory 1520, and the transceiver 1530 communicate with each other by using an internal connection path, to transfer a control and/or data signal. The foregoing method embodiments of this application may be applied to the processor, or the processor implements the steps of the foregoing method embodiments. The processor may be an integrated circuit chip and has a signal processing capability. In an implementation process, steps in the foregoing method embodiments can be completed by using a hardware-integrated logic circuit in the processor, or by using instructions in a form of software. The processor may be a CPU, a network processor NP, a combination of a CPU and an NP, a DSP, an ASIC, an FPGA or another programmable logic device, a discrete gate or a transistor logic device, or a discrete hardware component. The methods, the steps, and the logical block diagrams that are disclosed in this application may be implemented or performed. The general purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

Optionally, in another embodiment of the present invention, the processor 1510 is configured to determine a second time unit, where the second time unit is a time unit at which a maximum activation time expires or a time unit at which a scheduling command sent by the network device is received. The transceiver 1530 is further configured to receive a second uplink signal sent by the terminal device, using a second period or based on scheduling of the network device after the second time unit, where the second period is greater than the first period.

Optionally, in another embodiment of the present invention, before sending the instruction information, the transceiver 1530 is further configured to send configuration message of the secondary cell to the terminal device, where the configuration message of the secondary cell includes at least one of: period information of the RRM measurement, a period of the CSI measurement, a configuration of the first period, and configuration information of the second period.

Optionally, in another embodiment of the present invention, the instruction information and the activation command for the secondary cell may be sent in a form of an MAC CE, or sent in a form of physical layer signaling.

Optionally, in another embodiment of the present invention, the first uplink signal includes first channel state information CSI and/or a first sounding reference signal SRS, and the second uplink signal includes second CSI and/or a second SRS.

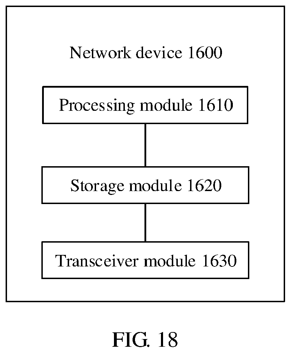

It should be noted that, in this embodiment of the present invention, the processor 1510 may be implemented by a processing module, the memory 1520 may be implemented by a storage module, and the transceiver 1530 may be implemented by a transceiver module. As shown in FIG. 18, a network device 1600 may include a processing module 1610, a storage module 1620, and a transceiver module 1630.

The network device 1500 shown in FIG. 17 or the network device 1600 shown in FIG. 18 can implement the steps performed by the network device in FIG. 6. To avoid repetition, details are not described herein again.

An embodiment of the present invention further provides a computer-readable medium, configured to store computer program code, and the computer program includes an instruction used to perform the method for activating a secondary cell in the embodiments of the present invention in FIG. 4, FIG. 5, and FIG. 6. The readable medium may be a read-only memory (read-only memory, ROM) or a random access memory (random access memory, RAM). This is not limited in this embodiment of this application.

An embodiment of the present invention further provides a communications system. The communications system includes the terminal device provided in the foregoing embodiments of the present invention and the network device provided in the foregoing embodiments of the present invention. The communications system can complete the method for activating a secondary cell according to any one of the embodiments of the present invention.

It should be understood that, the term "and/or" and "at least one of A or B" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for activating a secondary cell, comprising:
after receiving an activation command for a secondary cell that is sent by a network device, sending, by a terminal device, a first uplink signal to the network device using a first period from a first time unit;
determining, by the terminal device, a second time unit, wherein the second time unit is a time unit at which a maximum activation time expires or a time unit at which a scheduling command sent by the network device is received; and
sending, by the terminal device, a second uplink signal to the network device using a second period or based on scheduling of the network device after the second time unit, wherein the second period is greater than the first period.

2. The method according to claim 1, wherein before the terminal device receives the activation command for the secondary cell, the method further comprises:
receiving, by the terminal device, a configuration message of the secondary cell that is sent by the network device, wherein the configuration message comprises at least one of configuration information of the second period and configuration information of the scheduling of the network device, and configuration information of the first period.

3. The method according to claim 1 or 2, wherein the first uplink signal comprises first channel state information CSI and/or a first sounding reference signal SRS, and the second uplink signal comprises second CSI and/or a second SRS.

4. The method according to any one of claims 1 to 3, wherein the first time unit is a time unit at which the terminal device is capable of sending the first uplink signal to the network device.

5. A method for activating a secondary cell, comprising:
after a network device sends an activation command for a secondary cell to a terminal device, receiving, by the network device, a first uplink signal sent by the terminal device, using a first period from a first time unit;
determining, by the network device, a second time unit, wherein the second time unit is a time unit at which a maximum activation time expires or a time unit at which a scheduling command is sent to the terminal device; and
receiving, by the network device, a second uplink signal sent by the terminal device, using a second period or based on scheduling of the network device after the second time unit, wherein the second period is greater than the first period.

6. The method according to claim 5, wherein before the network device sends the activation command for the secondary cell to the terminal device, the method further comprises:
sending, by the network device, a configuration message of the secondary cell to the terminal device, wherein the configuration message comprises at least one of configuration information of the second period and configuration information of the scheduling of the network device, and configuration information of the first period.

7. The method according to claim 5 or 6, wherein the first uplink signal comprises first channel state information CSI and/or a first sounding reference signal SRS, and the second uplink signal comprises second CSI and/or a second SRS.

8. The method according to any one of claims 5 to 7, wherein the first time unit is a time unit at which the terminal device is capable of sending the first uplink signal to the network device.

9. A method for activating a secondary cell, comprising:
sending, by a network device, an activation command for a secondary cell to a terminal device at a third time unit;
sending, by the network device, a first pilot signal to the terminal device using a first period from the third time unit;
determining, by the network device, a fourth time unit, wherein the fourth time unit is a time unit at which a maximum activation time expires or a time unit at which the network device sends a scheduling command to the terminal device; and
sending, by the network device, a second pilot signal to the terminal device using a second period after the fourth time unit, wherein the second period is greater than the first period.

10. The method according to claim 9, wherein before the network device sends the activation command for the secondary cell, the method further comprises:
sending, by the network device, a configuration message of the secondary cell to the terminal device, wherein the configuration message comprises configuration information of the first period and configuration information of the second period.

11. The method according to claim 9 or 10, wherein the first pilot signal comprises a first demodulation reference signal DMRS and/or a first beam pilot signal, and the second pilot signal comprises a second DMRS and/or a second beam pilot signal.

12. A method for activating a secondary cell, comprising:
receiving, by a terminal device at a third time unit, an activation command for a secondary cell that is sent by a network device;
receiving, by the terminal device, a first pilot signal sent by the network device, using a first period from the third time unit;
determining, by the terminal device, a fourth time unit, wherein the fourth time unit is a time unit at which a maximum activation time expires or a time unit at which the terminal device receives a scheduling command sent by the network device; and
receiving, by the terminal device, a second pilot signal sent by the network device, using a second period after the fourth time unit, wherein the second period is greater than the first period.

13. The method according to claim 12, wherein before the terminal device receives the activation command for the secondary cell that is sent by the network device, the method further comprises:
receiving, by the terminal device, a configuration message of the secondary cell that is sent by the network device, wherein the configuration message comprises configuration information of the first period and configuration information of the second period.

14. The method according to claim 12 or 13, wherein the first pilot signal comprises a first demodulation reference signal DMRS and/or a first beam pilot signal, and the second pilot signal comprises a second DMRS and/or a second beam pilot signal.

15. A communications apparatus, comprising a processor, a transceiver, and a memory, wherein the memory is configured to store an instruction, and the processor is configured to execute the instruction stored in the memory, to control the transceiver to receive or send a signal;
the transceiver is configured to: after receiving an activation command for a secondary cell that is sent by a network device, send a first uplink signal to the network device using a first period from a first time unit;
the processor is configured to determine a second time unit, wherein the second time unit is a time unit at which a maximum activation time expires or a time unit at which a scheduling command sent by the network device is received; and
the transceiver is further configured to send a second uplink signal to the network device using a second period or based on scheduling of the network device after the second time unit, wherein the second period is greater than the first period.

16. The communications apparatus according to claim 15, wherein before receiving the activation command for the secondary cell, the transceiver is further configured to receive a configuration message of the secondary cell that is sent by the network device, wherein the configuration message comprises at least one of configuration information of the second period and configuration information of the scheduling of the network device, and configuration information of the first period.

17. The communications apparatus according to claim 15 or 16, wherein the first uplink signal sent by the transceiver comprises first channel state information CSI and/or a first sounding reference signal SRS, and the second uplink signal sent by the transceiver comprises second CSI and/or a second SRS.

18. The communications apparatus according to any one of claims 15 to 17, wherein the first time unit is a time unit at which the communications apparatus is capable of sending the first uplink signal to the network device.

19. A network device, comprising a processor, a transceiver, and a memory, wherein the memory is configured to store an instruction, and the processor is configured to execute the instruction stored in the memory, to control the transceiver to receive or send a signal;
the transceiver is configured to: after sending an activation command for a secondary cell to a terminal device, receive, by the network device, a first uplink signal sent by the terminal device, using a first period from a first time unit;
the processor is configured to determine a second time unit, wherein the second time unit is a time unit at which a maximum activation time expires or a time unit at which a scheduling command is sent to the terminal device; and
the transceiver is further configured to receive a second uplink signal sent by the terminal device, using a second period or based on scheduling of the network device after the second time unit, wherein the second period is greater than the first period.

20. The network device according to claim 19, wherein before sending the activation command for the secondary cell, the transceiver is further configured to send a configuration message of the secondary cell to the terminal device, wherein the configuration message comprises at least one of configuration information of the second period and configuration information of the scheduling of the network device, and configuration information of the first period.

21. The network device according to claim 19 or 20, wherein the first uplink signal received by the transceiver comprises first channel state information CSI and/or a first sounding reference signal SRS, and the second uplink signal received by the transceiver comprises second CSI and/or a second SRS.

22. The network device according to any one of claims 19 to 21, wherein the first time unit is a time unit at which the terminal device is capable of sending the first uplink signal to the network device.

23. A network device, comprising a processor, a transceiver, and a memory, wherein the memory is configured to store an instruction, and the processor is configured to execute the instruction stored in the memory, to control the transceiver to receive or send a signal;
the transceiver is configured to send an activation command for a secondary cell to a terminal device at a third time unit;
the transceiver is further configured to send a first pilot signal to the terminal device using a first period from the third time unit;
the processor is configured to determine a fourth time unit, wherein the fourth time unit is a time unit at which a maximum activation time expires or a time unit at which the network device sends a scheduling command to the terminal device; and
the transceiver is further configured to send a second pilot signal to the terminal device using a second period after the fourth time unit, wherein the second period is greater than the first period.

24. The network device according to claim 23, wherein before sending the activation command for the secondary cell, the transceiver is further configured to send a configuration message of the secondary cell to the terminal device, wherein the configuration message comprises configuration information of the first period and configuration information of the second period.

25. The network device according to claim 23 or 24, wherein the first pilot signal sent by the transceiver comprises a first demodulation reference signal DMRS and/or a first beam pilot signal, and the second pilot signal sent by the transceiver comprises a second DMRS and/or a second beam pilot signal.

26. A communications apparatus, comprising a processor, a transceiver, and a memory, wherein the memory is configured to store an instruction, and the processor is configured to execute the instruction stored in the memory, to control the transceiver to receive or send a signal;
the transceiver is configured to receive, at a third time unit, an activation command for a secondary cell that is sent by a network device;
the transceiver is further configured to receive a first pilot signal sent by the network device, using a first period from the third time unit;
the processor is configured to determine a fourth time unit, wherein the fourth time unit is a time unit at which a maximum activation time expires or a time unit at which the communications apparatus receives a scheduling command sent by the network device; and
the transceiver is further configured to receive a second pilot signal sent by the network device, using a second period after the fourth time unit, wherein the second period is greater than the first period.

27. The communications apparatus according to claim 26, wherein before receiving the activation command for the secondary cell, the transceiver is further configured to receive a configuration message of the secondary cell that is sent by the network device, wherein the configuration message comprises configuration information of the first period and configuration information of the second period.

28. The communications apparatus according to claim 26 or 27, wherein the first pilot signal sent by the transceiver comprises a first demodulation reference signal DMRS and/or a first beam pilot signal, and the second pilot signal sent by the transceiver comprises a second DMRS and/or a second beam pilot signal.

29. A computer-readable storage medium, configured to store a computer program, wherein the computer program is used to execute an instruction of the method for activating a secondary cell according to any one of claims 1 to 14.

30. A communications apparatus, comprising at least one processor and a memory, wherein the memory stores a computer program, and the at least one processor executes the computer program to implement the method according to any one of claims 1 to 14.
